# EUROPEAN PATENT APPLICATION

(11) **EP 4 492 849 A1**
(43) Date of publication of application: **15.01.2025**
(21) Application number: 23765977.6
(22) Date of filing: 07.03.2023
(51) Int. Cl.: H04W 24/02

(54) **COMMUNICATION METHOD, DEVICE, TERMINAL, AND NODE**

(30) Priority: 11.03.2022 CN 202210239556
(71) Applicant: VIVO MOBILE COMMUNICATION CO., LTD., Dongguan, Guangdong 523863 (CN)
(72) Inventor: BAO, Wei, Dongguan, Guangdong 523863 (CN); YUAN, Yannan, Dongguan, Guangdong 523863 (CN); LIU, Jiamin, Dongguan, Guangdong 523863 (CN)
(74) Representative: Lavoix
(86) International application number: PCT/CN2023/080013
(87) International publication number: WO 2023/169399

(57) **Abstract**

This application relates to the field of communication technologies, and discloses a communication method and apparatus, a terminal, and a node. The communication method includes: sending, by a terminal, first information to a first node, where the first information is used to indicate that the terminal requests a data plane DP-oriented connection, where the first information includes first indication information; and the first indication information is used to indicate at least one of the following: an establishment reason for the DP-oriented connection; and a type of the DP-oriented connection.

## Description

### CROSS-REFERENCE TO RELATED APPLICATIONS

This application claims priority to Chinese Patent Application No. 202210239556.0, filed in China on March 11, 2022, which is incorporated herein by reference in its entirety.

### TECHNICAL FIELD

This application pertains to the field of communication technologies, and specifically relates to a communication method and apparatus, a terminal, and a node.

### BACKGROUND

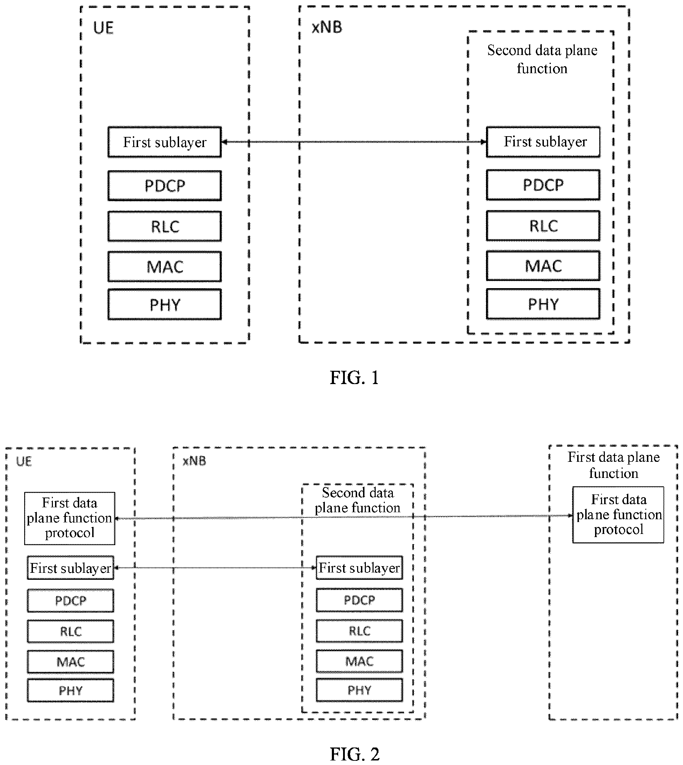

A technical solution for a future wireless network data plane (Data Plane, DP) protocol is shown in FIG. 1 and FIG. 2. A first sublayer in FIG. 1 and FIG. 2 is a data plane protocol layer terminated between a user terminal (User Equipment, UE) and a radio access network (x-Node-B, xNB) and configured to perform end-to-end data plane transmission between the UE and the radio access network. A first data plane function protocol in FIG. 2 is a data plane protocol layer terminated between the UE and a core network. A first data plane function (Data Plane Function, DPF) is a functional entity supporting a data plane function in the core network. The first DPF is configured to perform end-to-end data plane transmission between the UE and the core network, and/or provide configuration parameters and implement corresponding control functions for a data plane communication function between the UE and the network. In addition, composition of a packet data convergence protocol (Packet Data Convergence Protocol, PDCP) sublayer, a radio link control (Radio Link Control, RLC) protocol sublayer, a media access control (Media Access Control, MAC) sublayer, and a physical layer (Physical, PHY) in FIG. 1 and FIG. 2 is the same as that of an existing solution.

Different from a control plane (control plane, CP) and a user plane (user plane, UP) in an existing wireless network, a main function of the DP protocol is to support the UE in collecting and measuring specific data designated/configured by the network and transmitting the corresponding data or measurement results to the network, so that the network can make statistics, analysis, and decisions by using the data and/or measurement results, thereby assisting the network in defining transmission policies, optimizing communication performance indicators, and improving user experience in service data transmission.

Because the DP function is different from functions of a CP protocol (oriented to control signaling transmission) and a UP protocol (oriented to service data transmission itself) in the existing wireless network, a relatively independent technical solution is needed to support the DP function. However, functions and related procedures of CP and UP protocol stacks in the existing network are all designed to establish and maintain connections and tunnels for service data transmission and not applicable to a DP protocol stack.

### SUMMARY

Embodiments of this application provide a communication method and apparatus, a terminal, and a node to resolve a problem that functions and related procedures of CP and UP protocol stacks in an existing solution are all designed to establish and maintain connections and tunnels for service data transmission and not applicable to a DP protocol stack.

According to a first aspect, a communication method is provided and includes:
sending, by a terminal, first information to a first node, where the first information is used to indicate that the terminal requests a data plane DP-oriented connection, where
the first information includes first indication information; and
the first indication information is used to indicate at least one of the following:
   an establishment reason for the DP-oriented connection; and
   a type of the DP-oriented connection.

According to a second aspect, a communication apparatus is provided and includes:
a first sending module, configured to send first information to a first node, where the first information is used to indicate that a terminal requests a data plane DP-oriented connection, where
the first information includes first indication information; and
the first indication information is used to indicate at least one of the following:
   an establishment reason for the DP-oriented connection; and
   a type of the DP-oriented connection.

According to a third aspect, a communication method is provided and includes:
receiving, by a first node, first information sent by a terminal, where the first information is used to indicate that the terminal requests a data plane DP-oriented connection, where
the first information includes first indication information; and
the first indication information is used to indicate at least one of the following:
   an establishment reason for the DP-oriented connection; and
   a type of the DP-oriented connection.

According to a fourth aspect, a communication apparatus is provided and includes:
a first receiving module, configured to receive first information sent by a terminal, where the first information is used to indicate that the terminal requests a data plane DP-oriented connection, where
the first information includes first indication information; and
the first indication information is used to indicate at least one of the following:
   an establishment reason for the DP-oriented connection; and
   a type of the DP-oriented connection.

According to a fifth aspect, a communication method is provided and includes:
sending, by a first node, a request message to a second node, where the request message is used to request to obtain configuration information for communication of a terminal over an established DP connection, and the second node is a data plane function DPF node or a data plane control function DPF-C node; and
receiving, by the first node, the configuration information, sent by the second node, for communication of the terminal over the established DP connection.

According to a sixth aspect, a communication apparatus is provided and includes:
a second sending module, configured to send a request message to a second node, where the request message is used to request to obtain configuration information for communication of a terminal over an established DP connection, and the second node is a data plane function DPF node or a data plane control function DPF-C node; and
a second receiving module, configured to receive the configuration information, sent by the second node, for communication of the terminal over the established DP connection.

According to a seventh aspect, a communication method is provided and includes:
sending, by a first node, a first notification to a third node, where the first notification is used to indicate to the third node whether a terminal is establishing a DP-oriented connection.

According to an eighth aspect, a communication apparatus is provided and includes:
a second sending module, configured to send a first notification to a third node, where the first notification is used to indicate to the third node whether a terminal is establishing a DP-oriented connection.

According to a ninth aspect, a communication method is provided and includes:
receiving, by a second node, a request message sent by a first node, where the request message is used to request to obtain configuration information for communication of a terminal over an established data plane DP connection; and
sending, by the second node to the first node, the configuration information for communication of the terminal over the established DP connection, where
the second node is a data plane function DPF node or a data plane control function DPF-C node.

According to a tenth aspect, a communication apparatus is provided and applied to a second node and includes:
a third receiving module, configured to receive a request message sent by a first node, where the request message is used to request to obtain configuration information for communication of a terminal over an established data plane DP connection; and
a third sending module, configured to send, to the first node, the configuration information for communication of the terminal over the established DP connection, where
the second node is a data plane function DPF node or a data plane control function DPF-C node.

According to an eleventh aspect, a communication method is provided and includes:
performing, by a third node, a terminal identity association operation with a second node, where the second node is a data plane function DPF node or a data plane control function DPF-C node.

According to a twelfth aspect, a communication apparatus is provided and includes:
a second association module, configured to perform a terminal identity association operation with a second node, where the second node is a data plane function DPF node or a data plane control function DPF-C node.

According to a thirteenth aspect, a communication method is provided and includes:
receiving, by a third node, a first notification sent by a first node, where the first notification is used to indicate to the third node whether a terminal is establishing a DP-oriented connection.

According to a fourteenth aspect, a communication apparatus is provided and includes:
a fourth receiving module, configured to receive a first notification sent by a first node, where the first notification is used to indicate to the third node whether a terminal is establishing a DP-oriented connection.

According to a fifteenth aspect, a communication method is provided and includes:
performing, by a second node, a terminal identity association operation with a third node, where
the second node is a data plane function DPF node or a data plane control function DPF-C node.

According to a sixteenth aspect, a communication apparatus is provided and applied to a second node and includes:
a first association module, configured to perform a terminal identity association operation with a third node, where
the second node is a data plane function DPF node or a data plane control function DPF-C node.

According to a seventeenth aspect, a terminal is provided and includes a processor and a memory. The memory stores a program or instructions capable of running on the processor. When the program or instructions are executed by the processor, the steps of the method according to the first aspect are implemented.

According to an eighteenth aspect, a terminal is provided and includes a processor and a communication interface. The communication interface is configured to send first information to a first node, where the first information is used to indicate that the terminal requests a data plane DP-oriented connection, where
the first information includes first indication information; and
the first indication information is used to indicate at least one of the following:
   an establishment reason for the DP-oriented connection; and
   a type of the DP-oriented connection.

According to a nineteenth aspect, a communication node is provided. The communication node is a first node and includes a processor and a memory. The memory stores a program or instructions capable of running on the processor. When the program or instructions are executed by the processor, the steps of the method according to the third aspect, the fifth aspect, or the seventh aspect are implemented.

According to a twentieth aspect, a communication node is provided. The communication node is a first node and includes a processor and a communication interface. The communication interface is configured to receive first information sent by a terminal, where the first information is used to indicate that the terminal requests a data plane DP-oriented connection, where
the first information includes first indication information; and
the first indication information is used to indicate at least one of the following:
   an establishment reason for the DP-oriented connection; and
   a type of the DP-oriented connection.

According to a twenty-first aspect, a communication node is provided. The communication node is a first node and includes a processor and a communication interface. The communication interface is configured to send a request message to a second node, where the request message is used to request to obtain configuration information for communication of a terminal over an established DP connection, and the second node is a data plane function DPF node or a data plane control function DPF-C node; and
the first node receives the configuration information, sent by the second node, for communication of the terminal over the established DP connection.

According to a twenty-second aspect, a communication node is provided. The communication node is a first node and includes a processor and a communication interface. The communication interface is configured to send a first notification to a third node, where the first notification is used to indicate to the third node whether a terminal is establishing a DP-oriented connection.

According to a twenty-third aspect, a communication node is provided. The communication node is a second node, the second node is a data plane function DPF node or a data plane control function DPF-C node, and the communication node includes a processor and a memory. The memory stores a program or instructions capable of running on the processor. When the program or instructions are executed by the processor, the steps of the method according to the ninth aspect or the fifteenth aspect are implemented.

According to a twenty-fourth aspect, a communication node is provided. The communication node is a second node and includes a processor and a communication interface. The communication interface is configured to receive a request message sent by a first node, where the request message is used to request to obtain configuration information for communication of a terminal over an established data plane DP connection; and send, to the first node, the configuration information for communication of the terminal over the established DP connection, where
the second node is a data plane function DPF node or a data plane control function DPF-C node.

According to a twenty-fifth aspect, a communication node is provided. The communication node is a second node and includes a processor and a communication interface. The communication interface is configured to perform a terminal identity association operation with a third node, where
the second node is a data plane function DPF node or a data plane control function DPF-C node.

According to a twenty-sixth aspect, a communication node is provided. The communication node is a third node and includes a processor and a memory. The memory stores a program or instructions capable of running on the processor. When the program or instructions are executed by the processor, the steps of the method according to the eleventh aspect or the thirteenth aspect are implemented.

According to a twenty-seventh aspect, a communication node is provided. The communication node is a third node and includes a processor and a communication interface. The communication interface is configured to perform a terminal identity association operation with a second node, where the second node is a data plane function DPF node or a data plane control function DPF-C node.

According to a twenty-eighth aspect, a communication node is provided. The communication node is a third node and includes a processor and a communication interface. The communication interface is configured to receive a first notification sent by a first node, where the first notification is used to indicate to the third node whether a terminal is establishing a DP-oriented connection.

According to a twenty-ninth aspect, a communication system is provided and includes a terminal, a first node, a second node, and a third node. The terminal may be configured to perform the steps of the method according to the first aspect. The first node may be configured to perform the steps of the method according to the third aspect, the fifth aspect, or the seventh aspect. The second node may be configured to perform the steps of the method according to the ninth aspect or the fifteenth aspect. The third node may be configured to perform the steps of the method according to the eleventh aspect or the thirteenth aspect.

According to a thirtieth aspect, a readable storage medium is provided. The readable storage medium stores a program or instructions. When the program or instructions are executed by a processor, the steps of the method according to the first aspect, the third aspect, the fifth aspect, the seventh aspect, the ninth aspect, the eleventh aspect, the thirteenth aspect, or the fifteenth aspect are implemented.

According to a thirty-first aspect, a chip is provided. The chip includes a processor and a communication interface. The communication interface is coupled to the processor. The processor is configured to run a program or instructions to implement the method according to the first aspect, the third aspect, the fifth aspect, the seventh aspect, the ninth aspect, the eleventh aspect, the thirteenth aspect, or the fifteenth aspect.

According to a thirty-second aspect, a computer program or program product is provided. The computer program or program product is stored in a storage medium. The computer program or program product is executed by at least one processor to implement the steps of the method according to the first aspect, the third aspect, the fifth aspect, the seventh aspect, the ninth aspect, the eleventh aspect, the thirteenth aspect, or the fifteenth aspect.

In the embodiments of this application, functions and related procedures of a DP protocol stack among the terminal, the first node, the second node, and the third node are defined, to ensure that the terminal smoothly collects and measures specific data designated or configured by a network and transmits the corresponding data or measurement results to the network.

### BRIEF DESCRIPTION OF DRAWINGS

FIG. 1 is a diagram of a data plane protocol architecture of a terminal in a radio access network;
FIG. 2 is a diagram of a data plane protocol architecture of a terminal, a radio access network, and a core network;
FIG. 3 is a diagram of a user plane protocol stack architecture;
FIG. 4 is a diagram of a control plane protocol stack architecture;
FIG. 5 is a first schematic flowchart of a communication method according to an embodiment of this application;
FIG. 6 is a second schematic flowchart of a communication method according to an embodiment of this application;
FIG. 7 is a third schematic flowchart of a communication method according to an embodiment of this application;
FIG. 8 is a fourth schematic flowchart of a communication method according to an embodiment of this application;
FIG. 9 is a fifth schematic flowchart of a communication method according to an embodiment of this application;
FIG. 10 is a sixth schematic flowchart of a communication method according to an embodiment of this application;
FIG. 11 is a seventh schematic flowchart of a communication method according to an embodiment of this application;
FIG. 12 is an eighth schematic flowchart of a communication method according to an embodiment of this application;
FIG. 13 is a schematic diagram of a first network architecture supporting a data plane function;
FIG. 14 is a first schematic implementation flowchart in the schematic diagram of the first network architecture;
FIG. 15 is a second schematic implementation flowchart in the schematic diagram of the first network architecture;
FIG. 16 is a schematic diagram of a second network architecture supporting a data plane function;
FIG. 17 is a schematic implementation flowchart in the schematic diagram of the second network architecture;
FIG. 18 is a first schematic modular diagram of a communication apparatus according to an embodiment of this application;
FIG. 19 is a schematic diagram of a structure of a terminal according to an embodiment of this application;
FIG. 20 is a second schematic modular diagram of a communication apparatus according to an embodiment of this application;
FIG. 21 is a schematic modular diagram of a first node according to an embodiment of this application;
FIG. 22 is a third schematic modular diagram of a communication apparatus according to an embodiment of this application;
FIG. 23 is a fourth schematic modular diagram of a communication apparatus according to an embodiment of this application;
FIG. 24 is a fifth schematic modular diagram of a communication apparatus according to an embodiment of this application;
FIG. 25 is a sixth schematic modular diagram of a communication apparatus according to an embodiment of this application;
FIG. 26 is a seventh schematic modular diagram of a communication apparatus according to an embodiment of this application;
FIG. 27 is an eighth schematic modular diagram of a communication apparatus according to an embodiment of this application; and
FIG. 28 is a schematic diagram of a structure of a communication device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

The following first describes the prior art related to this application.

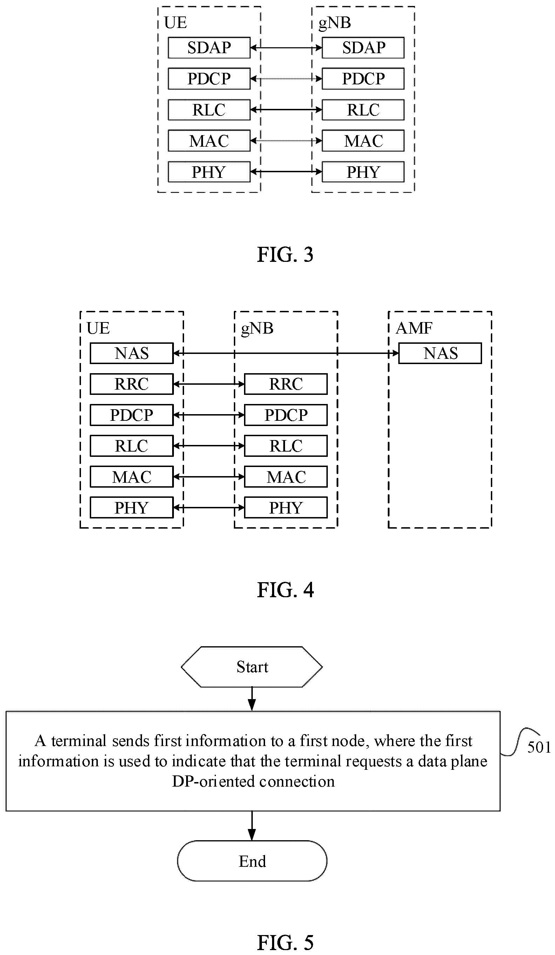

According to the 3rd Generation Partnership Project (3rd Generation Partnership Project, 3GPP) technical specification TS 38.300, definitions of control plane (control plane, CP) and user plane (user plane, UP) protocol architectures are as follows: As shown in FIG. 3, a user plane includes a service data adaptation protocol (Service Data Adaptation Protocol, SDAP) sublayer, a packet data convergence protocol (Packet Data Convergence Protocol, PDCP) sublayer, a radio link control (Radio Link Control, RLC) protocol sublayer, a media access control (Media Access Control, MAC) sublayer, and a physical layer (Physical, PHY), and is used for wireless transmission of various service data (such as videos, voices, and files) between a user terminal (UE) and a network. As shown in FIG. 4, a control plane includes a non-access stratum (Non Access Stratum, NAS), a radio resource control (Radio Resource Control, RRC) sublayer, a PDCP sublayer, an RLC sublayer, a MAC sublayer, and a PHY, and is used for transmission of control signaling (such as NAS signaling and RRC signaling) between the network and the UE. The network delivers related configuration information to the UE by using the control signaling, and controls a communication behavior between the UE and the network, thereby ensuring that transmission of service data meets a service requirement.

A communication method and apparatus, a terminal, and a node provided in the embodiments of this application are hereinafter described in detail by using some embodiments and application scenarios thereof with reference to the accompanying drawings.

As shown in FIG. 5, an embodiment of this application provides a communication method, including the following step.

Step 501: A terminal sends first information to a first node, where the first information is used to indicate that the terminal requests a data plane DP-oriented connection.

The first information includes first indication information.

The first indication information is used to indicate at least one of the following.

A11. An establishment reason for the DP-oriented connection.

It should be noted that a value of the establishment reason indicates the DP-oriented connection.

A12. A type of the DP-oriented connection.

It should be noted that a value of the type indicates the DP-oriented connection.

It should be noted that the first node mentioned in this embodiment of this application is an access network device (that is, a device on an access network side). For example, the first node may be an evolved NodeB (eNode-B, eNB), a 5th Generation (5th Generation, 5G) NodeB (gNode-B, gNB), or an access network node of another wireless network.

In this case, the terminal notifies the first node of the first indication information when communicating with the first node, to establish a DP-oriented connection with a network side.

Implementations of step 501 are described separately as follows.

First implementation of step 501: The terminal sends a first message to the first node, where the first message is used to request the network side to establish the DP-oriented connection, where
the first message includes the first information.

It should be noted that in this case, the terminal sends a connection establishment request to the first node to request the network to establish the DP-oriented connection. Based on the request of the terminal, the first node may determine whether to accept or reject the request of the terminal.

The first message may be a DP-oriented connection establishment request message. Its specific form may be an RRC establishment request message, transmitted by using a signaling radio bearer (Signaling Radio Bearer, SRB) 0 and sent by the terminal to the first node.

It should be noted that the terminal may use one of the following implementations to send the first message to the first node.

Implementation B 11: The terminal actively triggers sending of the first message to the first node.

Optionally, a specific implementation process of the implementation may be: sending the first message to the first node in a case that the terminal determines that a measurement quantity of DP data meets a first preset threshold.

It should be noted that the measurement quantity mentioned in this embodiment of this application may include but is not limited to: data collection, a performance indicator, communication quality, service experience, a time delay, a rate, a bit error rate, or the like. It should also be noted that first preset thresholds corresponding to different measurement quantities are usually different.

Optionally, a specific implementation of the sending the first message to the first node in a case that the terminal determines that a measurement quantity of DP data meets a first preset threshold is: a non-access stratum (NAS) of the terminal triggers a first message sending request to an access stratum (Access Stratum, AS) in the case that it is determined that the measurement quantity of the DP data meets the first preset threshold; and the AS sends the first message to the first node based on the first message sending request. In other words, whether the threshold is met may be determined by the NAS of the terminal, and when triggering is determined, the AS of the terminal is instructed to send the first message (that is, initiate a connection establishment request). The NAS may be a CP-oriented protocol layer in the 3GPP 5G protocol (that is, a CP-oriented NAS protocol layer) or a DP-oriented protocol layer (that is, a DP-oriented dedicated NAS protocol layer).

Implementation B 12: The terminal sends the first message to the first node based on a received first notification message sent by the first node.

Optionally, the first notification message includes second indication information, and the second indication information is used to indicate the establishment reason for the DP-oriented connection and/or the type of the DP-oriented connection. It should be noted that, for descriptions of the establishment reason and/or type, reference may be made to A11 and A12 mentioned above. Details are not described herein again.

It should be noted that sending of the first message is triggered by the first node in this implementation. To be specific, the first node first sends the first notification message to the terminal, and then the terminal sends the first message to the first node based on the second indication information in the first notification message (that is, a connection establishment request of a corresponding connection type is sent to the first node).

Optionally, the first notification message is a paging message.

Optionally, it should also be noted that, to enable the first node to clearly know a source of the first message, the first message further needs to include identification information of the terminal. Optionally, the identification information may be an international mobile subscriber identity (International Mobile Subscriber Identity, IMSI) or a temporary mobile subscriber identity (Temporary Mobile Subscriber Identity, TMSI), or may be a DP-oriented terminal identity (that is, the network numbers DP-oriented terminals separately, and in a DP-oriented case, each terminal corresponds to one number or index).

Optionally, the first message further includes third indication information, the third indication information is used to indicate an establishment reason for a first connection or a type of the first connection, and the first connection is another connection different from the DP-oriented connection. In other words, on a basis of the foregoing indication information of the DP-oriented connection, the first message may further include indication information of other connection establishment reasons or connection types, for example, may further include indication information of a connection establishment reason or connection type that is a UP-oriented connection, and its specific value may be access terminated at the terminal (mt-Access), a voice call originated by the terminal (mo-VoiceCall), an emergency (emergency) service, or the like. This is not limited herein.

Optionally, when the triggering form is triggering by the terminal receiving signaling from the network (that is, the terminal receives the first notification message from the first node), the first notification message sent by the first node to the terminal may further include the indication information of the connection reason/type that is the UP-oriented connection, and its specific value is similar to that of the foregoing first indication information. Details are not described herein again.

Optionally, in this case, after the terminal sends the first message to the first node, the method further includes the following steps.

Step 502: The terminal receives a second message sent by the first node, where the second message includes configuration information for a first bearer corresponding to the DP-oriented connection, and the first bearer is a first radio bearer or a first signaling radio bearer.

It should be noted that the configuration information for the first bearer includes configuration parameters related to a packet data convergence protocol (PDCP), radio link control (RLC), and a logical channel corresponding to the first bearer, as well as configuration parameters related to wireless communication resources required for transmission of the first bearer.

Optionally, in one case, a data plane node has both a data plane control function (that is, DPF-C, which may also be referred to as a data plane management function) and a data plane service function (DPF-U, which may also be referred to as a data plane service transmission function) that are not separated. In other words, in this case, the first bearer is the first radio bearer, and the first radio bearer may be used for transmission of DP-related control information and transmission of DP service data. In another case, the data plane node is split into two nodes, that is, a DPF-C node and a DPF-U node. In this case, the first bearer is the first signaling radio bearer, and the first signaling radio bearer can be used only for transmission of DP-related control information.

Optionally, the second message is a DP-oriented connection establishment message. Its specific form may be an RRC connection establishment message, transmitted by using the signaling radio bearer SRB 0 and sent by the first node to the terminal.

In addition, optionally, the second message may further include identification information for DP communication (that is, identification information dedicated to DP communication of the terminal), and the first node schedules resources for subsequent transmission of DP-related control signaling and DP service data of the terminal by using the dedicated identification information. The terminal establishes a first bearer of a DP based on the configuration information for the first bearer.

Optionally, the second message further includes configuration information corresponding to a second signaling radio bearer, where the second signaling radio bearer is used for transmission other than transmission of control information of the DP-oriented connection. It should be noted that the second signaling radio bearer is an SRB 1, and its configuration information includes configuration parameters related to PDCP, RLC, and a logical channel corresponding to the second signaling radio bearer. The terminal establishes the second signaling radio bearer based on the configuration information corresponding to the second signaling radio bearer.

Step 503: The terminal sends a third message to the first node, where the third message is used to indicate that establishment of the DP-oriented connection is complete.

Optionally, the third message includes a connection type of the DP-oriented connection established by the terminal, where
the connection type includes one of the following:
B21. the DP-oriented connection is terminated at the access network side; and
B22. the DP-oriented connection is terminated at a core network side.

It should be noted that terminating at the core network side may be understood as terminating the DP-oriented connection at a DPF or terminating the DP-oriented connection at a DPF-C.

Optionally, a manner of obtaining the connection type includes at least one of the following.

B31. Obtaining by using a NAS indication.

It should be noted that because the third message is sent by the AS of the terminal, the connection type of the DP-oriented connection needs to be obtained before the third message is sent, where the connection type may be the connection type of the DP-oriented connection that is carried in indication information sent by the NAS of the terminal to the AS, and the AS may obtain the connection type of the DP-oriented connection by parsing the indication information.

B32. Obtaining by using the first notification message of the first node.

It should be noted that in this case, the first node needs to send the first notification message to the terminal, where the first notification message carries a related indication of the connection type of the DP-oriented connection, and the terminal may determine the specific connection type based on the related indication.

Optionally, the third message includes:
fourth indication information, where the fourth indication information is used to indicate other connection types, where
the other connection types include at least one of the following:
   B41. a DP connection type of data; and
   B42. a DP connection type of control.

Optionally, the third message includes:
B51. identification information of a second node, where the second node is a DPF node or a DPF-C node, where
to be specific, when a data plane node has both a DPF-C and a DPF-U that are not separated, the second node is a DPF node, or when a data plane node is split into two nodes, that is a DPF-C node and a DPF-U node, the second node is a DPF-C node; and
B61. identification information of a public land mobile network (Public Land Mobile Network, PLMN) selected for access by the terminal.

Optionally, the third message is a DP-oriented connection establishment complete message, and may be transmitted by using the first radio bearer or transmitted by using the second signaling radio bearer. Optionally, a specific form of the DP-oriented connection establishment message may be an RRC connection establishment complete message or a connection establishment complete message used for the DP (it may be understood that the connection establishment message is a connection establishment complete message dedicated to the DP).

In a case that the connection type is the DP-oriented connection terminated at the access network side, the third message further includes initial NAS information, such as DP-oriented registration request information.

It should be noted that the foregoing established DP-oriented connection is a DP access stratum connection between the terminal and the first node. After the terminal sends the third message, the terminal considers that establishment of the DP-oriented connection is complete.

Second implementation of step 501: The terminal sends an RRC connection establishment complete message to the first node, where the RRC connection establishment complete message includes the first information.

It should be noted that the first node may determine, based on the establishment reason for and/or the type of the requested connection carried in the RRC connection establishment complete message, whether to subsequently communicate with the DPF or DPF-C, to obtain DP-related configuration information for the terminal.

Optionally, the RRC connection establishment complete message further includes identification information of the terminal. The identification information may be an IMSI or a TMSI, or a terminal identity dedicated to the DP.

Optionally, the RRC connection establishment complete message further includes identification information of a second node, where the second node is a DPF node or a DPF-C node.

To be specific, when a data plane node has both a DPF-C and a DPF-U that are not separated, the second node is a DPF node, or when a data plane node is split into two nodes, that is a DPF-C node and a DPF-U node, the second node is a DPF-C node.

It should also be noted that the RRC connection establishment complete message may be transmitted by using the second signaling radio bearer SRB 1.

Optionally, in this case, before the sending an RRC connection establishment complete message to the first node, the method further includes at least one of the following.

C11. The terminal actively triggers sending of an RRC connection establishment request to the first node.

It should be noted that a specific implementation of the process is: sending the RRC connection establishment request to the first node in a case that the terminal determines that a measurement quantity of DP data meets a second preset threshold.

It should be noted that the measurement quantity mentioned in this embodiment of this application may include but is not limited to: data collection, a performance indicator, communication quality, service experience, a time delay, a rate, a bit error rate, or the like. It should also be noted that second preset thresholds corresponding to different measurement quantities are usually different.

Optionally, a specific implementation of the sending the RRC connection establishment request to the first node in a case that the terminal determines that a measurement quantity of DP data meets a second preset threshold is: the non-access stratum (NAS) of the terminal triggers an RRC connection establishment request sending request to the access stratum (AS) in the case that it is determined that the measurement quantity of the DP data meets the second preset threshold; and the AS sends the RRC connection establishment request to the first node based on the RRC connection establishment request sending request. In other words, whether the threshold is met may be determined by the NAS of the terminal, and when triggering is determined, the AS of the terminal is instructed to send the RRC connection establishment request. The NAS may be a CP-oriented protocol layer in the 3GPP 5G protocol (that is, a CP-oriented NAS protocol layer) or a DP-oriented protocol layer (that is, a DP-oriented dedicated NAS protocol layer).

C12. The terminal sends the RRC connection establishment request to the first node based on a received second notification message sent by the first node.

Optionally, the second notification message includes fifth indication information, and the fifth indication information is used to indicate the establishment reason for the DP-oriented connection and/or the type of the DP-oriented connection. It should be noted that, for descriptions of the establishment reason and/or type, reference may be made to A11 and A12 mentioned above. Details are not described herein again.

It should be noted that the RRC connection establishment request is triggered by the first node in this implementation. To be specific, the first node first sends the second notification message to the terminal, and then the terminal sends the RRC connection establishment request to the first node based on the fifth indication information in the second notification message.

Optionally, after the sending an RRC connection establishment complete message to the first node, the method further includes:
the terminal receives a fourth message sent by the first node, where the fourth message includes configuration information for a first bearer corresponding to the DP-oriented connection, and the first bearer is a first radio bearer or a first signaling radio bearer.

It should be noted that in this case, the terminal sends the first information in the RRC connection establishment complete message, that is, notifies the network side that the DP-oriented connection needs to be established. Then the network side needs to configure the first bearer corresponding to the DP-oriented connection for the terminal and send the configuration information to the terminal, so that the terminal can establish the corresponding bearer.

As can be learned from above, when the terminal establishes the first radio bearer, the terminal and the DPF transmit, by using the first radio bearer, control signaling and/or DP service data of the DP-oriented connection terminated at the core network side; or when the terminal establishes the first signaling radio bearer, the terminal and the DPF-C node transmit control signaling by using the first signaling radio bearer.

It should also be noted that if the data plane node is split into the DPF-C node and the DPF-U node, the network side only establishes the first signaling radio bearer based on the request of the terminal, but to ensure data transmission, the network side also needs to establish a data plane data radio bearer. Because the DP is split into one terminated at the access network side and one terminated at the core network side, the terminal needs to separately establish a data plane data radio bearer terminated at the access network side and a data plane data radio bearer terminated at the core network side.

Optionally, for establishment of the data plane data radio bearer terminated at the access network side, a specific implementation process is:
the terminal receives configuration information for a first data plane data radio bearer that is sent by the first node, where the configuration information includes sixth indication information, and the sixth indication information is used to indicate that the first data plane data radio bearer is terminated at the access network side.

It should be noted that the data plane data radio bearer is established by the terminal based on the configuration information for the first data plane data radio bearer. The terminal sends, to the first node by using the first data plane data radio bearer, data plane service data terminated at the access network side.

It should be noted that the configuration information for the first data plane data radio bearer may be autonomously configured by the first node for the terminal, or may be configured based on the request of the terminal. Specifically, in a case that the configuration information for the first data plane data radio bearer is configured based on the request of the terminal, before the receiving configuration information for a first data plane data radio bearer that is sent by the first node, the method further includes:
the terminal sends a first request to the first node, where the first request is used to request configuration information for a data plane data radio bearer from the first node.

When the first node receives the first request, the first node configures the first data plane data radio bearer based on the first request of the terminal, and sends the configuration information for the first data plane data radio bearer to the terminal.

Optionally, the first request includes:
seventh indication information, where the seventh indication information is used to indicate that the data plane data radio bearer requested by the terminal is terminated at the access network side.

Optionally, the sending a first request to the first node includes:
sending the first request to the first node in a case that the terminal determines that the measurement quantity of the DP data meets a third preset threshold.

It should be noted that the measurement quantity mentioned in this embodiment of this application may include but is not limited to: data collection, a performance indicator, communication quality, service experience, a time delay, a rate, a bit error rate, or the like. It should also be noted that third preset thresholds corresponding to different measurement quantities are usually different.

Optionally, a specific implementation of the sending the first request to the first node in a case that the terminal determines that the measurement quantity of the DP data meets a third preset threshold is: the non-access stratum (NAS) of the terminal triggers a first request sending request to the access stratum (AS) in the case that it is determined that the measurement quantity of the DP data meets the third preset threshold; and the AS sends the first request to the first node based on the first request sending request. In other words, whether the threshold is met may be determined by the NAS of the terminal, and when triggering is determined, the AS of the terminal is instructed to send the first request. The NAS may be a CP-oriented protocol layer in the 3GPP 5G protocol (that is, a CP-oriented NAS protocol layer) or a DP-oriented protocol layer (that is, a DP-oriented dedicated NAS protocol layer).

Optionally, the first request may further include information such as a service type and quality of service (Quality of Service, QoS) of the requested data plane transmission.

It should be noted herein that both the first request and the configuration information for the first data plane data radio bearer are transmitted by using the first signaling radio bearer.

Optionally, for establishment of the data plane data radio bearer terminated at the core network side, a specific implementation process is:
the terminal receives configuration information for a second data plane data radio bearer that is sent by the first node, where the configuration information includes eighth indication information, and the eighth indication information is used to indicate that the second data plane data radio bearer is terminated at the core network side.

It should be noted that the second data plane data radio bearer is terminated at the core network side, that is, the related configuration of the second data plane data radio bearer is usually determined by the DPF-C node on the core network side. Specifically, the DPF-C node may provide the access network side with configuration parameters of the configuration information for the second data plane radio bearer, such as a QoS criterion, and security configuration activation related information, and the information and configuration parameters are forwarded by an access and mobility management function (Access and Mobility Management Function, AMF) on the core network side to the access network device. The access network device generates the configuration information for the second data plane data radio bearer based on these parameters. The terminal establishes the second data plane data radio bearer based on the configuration information. In addition, the DPF-C node further provides the access network device and the DPF-U node with data plane channel configuration information oriented to the core network, for example, related information of a user plane general packet radio service tunneling protocol (GPRS tunneling protocol, GTP)-U, and sends the information to the DPF-U through a D4 interface between the DPF-C and the DPF-U to establish a related channel.

The UE sends, to the network by using the second data plane data radio bearer, data plane service data terminated at the core network side.

It should be noted that the configuration information for the second data plane data radio bearer may be autonomously configured by the network for the terminal, or may be configured based on the request of the terminal. Specifically, in a case that the configuration information for the second data plane data radio bearer is configured based on the request of the terminal, before the receiving configuration information for a second data plane data radio bearer that is sent by the first node, the method further includes:
the terminal sends a second request to the first node, where the second request is used to request configuration information for a data plane data radio bearer from the first node.

When the first node receives the second request, the first node sends the configuration information for the second data plane data radio bearer to the terminal based on the second request of the terminal.

Optionally, the second request includes:
ninth indication information, where the ninth indication information is used to indicate that the data plane data radio bearer requested by the terminal is terminated at the core network side.

Optionally, the sending a second request to the first node includes:
sending the second request to the first node in a case that the terminal determines that the measurement quantity of the DP data meets a fourth preset threshold.

It should be noted that the measurement quantity mentioned in this embodiment of this application may include but is not limited to: data collection, a performance indicator, communication quality, service experience, a time delay, a rate, a bit error rate, or the like. It should also be noted that fourth preset thresholds corresponding to different measurement quantities are usually different.

Optionally, a specific implementation of the sending the second request to the first node in a case that the terminal determines that the measurement quantity of the DP data meets a fourth preset threshold is: the non-access stratum (NAS) of the terminal triggers a second request sending request to the access stratum (AS) in the case that it is determined that the measurement quantity of the DP data meets the fourth preset threshold; and the AS sends the second request to the first node based on the second request sending request. In other words, whether the threshold is met may be determined by the NAS of the terminal, and when triggering is determined, the AS of the terminal is instructed to send the second request. The NAS may be a CP-oriented protocol layer in the 3GPP 5G protocol (that is, a CP-oriented NAS protocol layer) or a DP-oriented protocol layer (that is, a DP-oriented dedicated NAS protocol layer).

Optionally, the second request may further include information such as a service type and QoS of the requested data plane transmission.

It should also be noted that the second request may be sent in a form of a container to the first node by using the first signaling radio bearer, then transparently transmitted by the first node to the AMF through an N2 interface between the access network device and the AMF, and then forwarded by the AMF to the DPF-C through a D3 interface between the AMF and the DPF-C.

It should be noted that the foregoing embodiment provides the terminal with a manner of establishing the DP-oriented connection, to ensure that the terminal can smoothly establish the DP-oriented connection. This lays a basis for subsequent data communication and ensures smooth progress of the subsequent data communication.

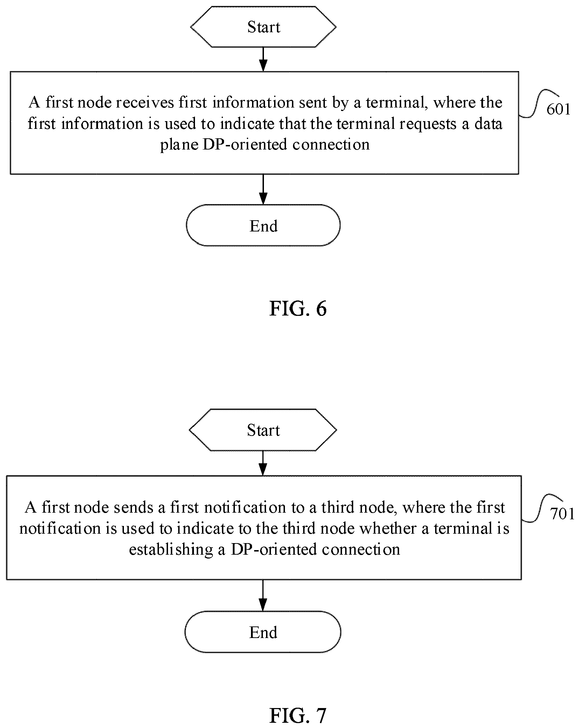

Corresponding to the implementation of the terminal side, as shown in FIG. 6, an embodiment of this application further provides a communication method, including the following step.

Step 601: A first node receives first information sent by a terminal, where the first information is used to indicate that the terminal requests a data plane DP-oriented connection, where
the first information includes first indication information; and
the first indication information is used to indicate at least one of the following:
   an establishment reason for the DP-oriented connection; and
   a type of the DP-oriented connection.

Optionally, the first node is an access network device.

Optionally, the receiving first information sent by a terminal includes:
receiving, by the first node, a first message sent by the terminal, where the first message is used to request a network side to establish the DP-oriented connection, and
the first message includes the first information.

Optionally, the first message further includes third indication information, the third indication information is used to indicate an establishment reason for a first connection or a type of the first connection, and the first connection is another connection different from the DP-oriented connection.

Optionally, after the receiving a first message sent by the terminal, the method further includes:
the first node sends a second message to the terminal, where the second message includes configuration information for a first bearer corresponding to the DP-oriented connection, and the first bearer is a first radio bearer or a first signaling radio bearer; and
the first node receives a third message sent by the terminal, where the third message is used to indicate that establishment of the DP-oriented connection is complete.

Optionally, the second message is a DP-oriented connection establishment message.

Optionally, the second message includes identification information for DP communication.

Optionally, the first bearer is used for at least one of the following:
transmission of DP-related control information; and
transmission of DP service data.

Optionally, the second message further includes:
configuration information corresponding to a second signaling radio bearer.

Optionally, the third message includes:
a connection type of the DP-oriented connection established by the terminal, where
the connection type includes one of the following:
   the DP-oriented connection is terminated at an access network side; and
   the DP-oriented connection is terminated at a core network side.

Optionally, the third message includes:
fourth indication information, where the fourth indication information is used to indicate other connection types, where
the other connection types include at least one of the following:
   a DP connection type of data; and
   a DP connection type of control.

Optionally, the third message includes:
identification information of a second node, where the second node is a data plane function DPF node or a data plane control function DPF-C node; and
identification information of a public land mobile network PLMN selected for access by the terminal.

Optionally, the third message is a DP-oriented connection establishment complete message.

Optionally, the DP-oriented connection establishment complete message is a radio resource control RRC connection establishment complete message or a connection establishment complete message used for a DP.

Optionally, the receiving first information sent by a terminal includes:
receiving, by the first node, an RRC connection establishment complete message sent by the terminal, where the RRC connection establishment complete message includes the first information.

Optionally, the RRC connection establishment complete message further includes:
identification information of the terminal.

Optionally, the RRC connection establishment complete message further includes:
identification information of a second node, where the second node is a DPF node or a DPF-C node.

Optionally, after the receiving an RRC connection establishment complete message sent by the terminal, the method further includes:
the first node receives an RRC connection establishment request sent by the terminal.

Optionally, after the receiving an RRC connection establishment complete message sent by the terminal, the method further includes:
the first node sends a fourth message to the terminal, where the fourth message includes configuration information for a first bearer corresponding to the DP-oriented connection, and the first bearer is a first radio bearer or a first signaling radio bearer.

Optionally, in a case that the first bearer is the first signaling radio bearer, the method further includes:
the first node sends configuration information for a first data plane data radio bearer to the terminal, where the configuration information includes sixth indication information, and the sixth indication information is used to indicate that the first data plane data radio bearer is terminated at an access network side.

Optionally, before the sending configuration information for a first data plane data radio bearer to the terminal, the method further includes:
the first node receives a first request sent by the terminal, where the first request is used to request configuration information for a data plane data radio bearer from the first node.

Optionally, the first request includes:
seventh indication information, where the seventh indication information is used to indicate that the data plane data radio bearer requested by the terminal is terminated at the access network side.

Optionally, in a case that the first bearer is the first signaling radio bearer, the method further includes:
the first node sends configuration information for a second data plane data radio bearer to the terminal, where the configuration information includes eighth indication information, and the eighth indication information is used to indicate that the second data plane data radio bearer is terminated at a core network side.

Optionally, before the sending configuration information for a second data plane data radio bearer to the terminal, the method further includes:
the first node receives a second request sent by the terminal, where the second request is used to request configuration information for a data plane data radio bearer from the first node.

Optionally, the second request includes:
ninth indication information, where the ninth indication information is used to indicate that the data plane data radio bearer requested by the terminal is terminated at the core network side.

It should be noted that all descriptions of the first node side in the foregoing embodiment are applicable to the embodiment of the communication method applied to the first node, with the same technical effect achieved. Details are not described herein again.

As shown in FIG. 7, an embodiment of this application further provides a communication method, including the following step.

Step 701: A first node sends a first notification to a third node, where the first notification is used to indicate to the third node whether a terminal is establishing a DP-oriented connection.

It should be noted that the first node mentioned in this embodiment of this application is an access network device. For example, the first node may be an eNode-B, a gNode-B, or an access network node of another wireless network. The third node is an access and mobility management function (AMF).

It should be noted that the terminal, the access network side, and the AMF may register the terminal based on an existing initial registration or registration update process and establish a NAS connection. If the AMF knows that the terminal is establishing the DP-oriented connection and accepts the registration of the terminal, the AMF provides the terminal with at least a list of tracking areas corresponding to a registration area in a registration accept message. Optionally, the first node may notify the AMF, so that the AMF can know whether the terminal is establishing the DP-oriented connection.

In other words, by sending a notification to the AMF to indicate to the third node whether the terminal is establishing the DP-oriented connection, it is ensured that the terminal establishing the DP-oriented connection can be managed and that reliability of communication can be ensured.

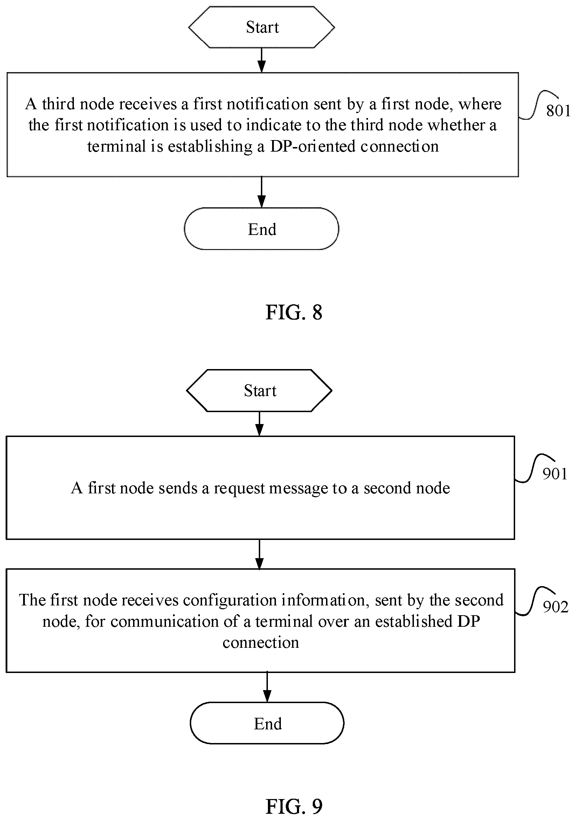

Corresponding to the implementation of the first node side, as shown in FIG. 8, an embodiment of this application further provides a communication method, including the following step.

Step 801: A third node receives a first notification sent by a first node, where the first notification is used to indicate to the third node whether a terminal is establishing a DP-oriented connection.

It should be noted that all descriptions of the third node side in the foregoing embodiment are applicable to the embodiment of the communication method applied to the third node, with the same technical effect achieved. Details are not described herein again.

As shown in FIG. 9, an embodiment of this application further provides a communication method, including the following steps.

Step 901: A first node sends a request message to a second node, where the request message is used to request to obtain configuration information for communication of a terminal over an established DP connection, and the second node is a data plane function DPF node or a data plane control function DPF-C node.

It should be noted that the first node mentioned in this embodiment of this application is an access network device. For example, the first node may be an eNode-B, a gNode-B, or an access network node of another wireless network.

Step 902: The first node receives the configuration information, sent by the second node, for communication of the terminal over the established DP connection.

It should be noted that the first node and the corresponding DPF node or DPF-C node perform subsequent DP communication and exchange related configuration information over the established DP connection for the terminal. Optionally, the first node may determine, based on whether a value of a connection type of the DP-oriented connection is terminating at a core network side, whether to communicate with the corresponding DPF node or DPF-C node. Optionally, if information reported by the terminal carries identification information of the DPF node or DPF-C node, the first node determines the corresponding DPF node or DPF-C node based on the identification information of the DPF node or DPF-C node; or if identification information of the DPF node or DPF-C node is not carried, the first node exchanges the information with a default (Default) DPF node or DPF-C node.

Optionally, in a case that the terminal does not report the connection type of the DP-oriented connection, the first node may alternatively determine, based on its own algorithm, whether the first node needs to exchange information with the DPF node or the DPF-C node, for example, determine, based on whether the first node itself has a security configuration function, whether the first node needs to exchange information with the DPF node or the DPF-C node. This is not specifically limited herein.

Optionally, the configuration information mentioned in this embodiment of this application may include but is not limited to:
security-related information of DP communication, such as a communication key, an encryption algorithm, and an integrity protection algorithm;
a type of DP service for which the terminal can perform DP communication;
trigger condition information for initiating DP transmission for a corresponding service type; and
a measurement quantity corresponding to corresponding service reporting.

It should be noted that the configuration information may be used for the first node to reconfigure or update related configuration parameters of a first radio bearer or a first signaling radio bearer of a DP based on the corresponding information. This is not limited in this application.

It should be noted that a communication process between the access network device and the DPF node or DPF-C node on the core network side is defined in this embodiment of this application to ensure establishment of the corresponding DP-oriented connection bearer and smooth progress of subsequent data communication.

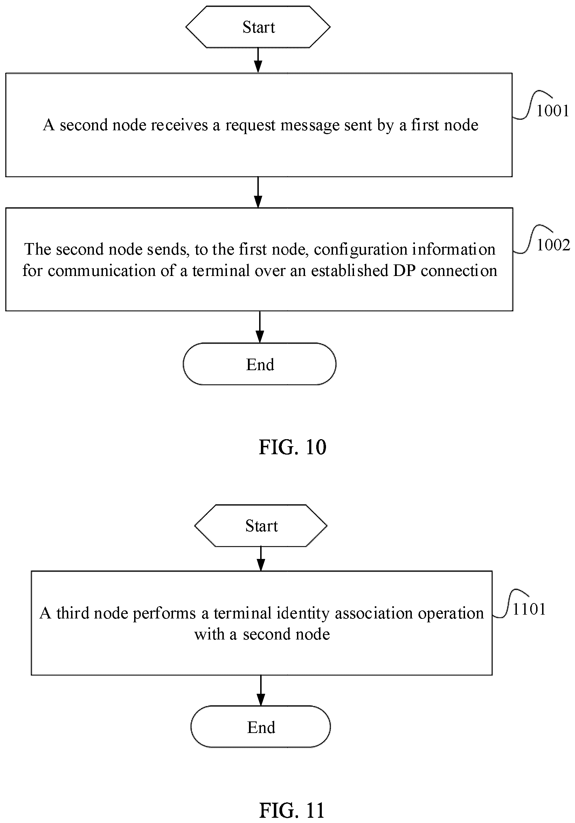

Corresponding to the implementation of the first node side, as shown in FIG. 10, an embodiment of this application further provides a communication method, including the following steps.

Step 1001: A second node receives a request message sent by a first node, where the request message is used to request to obtain configuration information for communication of a terminal over an established data plane DP connection.

Step 1002: The second node sends, to the first node, the configuration information for communication of the terminal over the established DP connection, where
the second node is a data plane function DPF node or a data plane control function DPF-C node.

It should be noted that all descriptions of the second node side in the foregoing embodiment are applicable to the embodiment of the communication method applied to the second node, with the same technical effect achieved. Details are not described herein again.

As shown in FIG. 11, an embodiment of this application further provides a communication method, including the following step.

Step 1101: A third node performs a terminal identity association operation with a second node, where
the second node is a data plane function DPF node or a data plane control function DPF-C node.

It should be noted that the third node is an access and mobility management function AMF.

Optionally, an optional implementation of the performing a terminal identity association operation with a second node includes:
the third node sends a first terminal identity to the second node, where the first terminal identity is an identity used for communication between a terminal and the third node; and
the third node receives an association relationship sent by the second node, where the association relationship is used to indicate that the first terminal identity is associated with a second terminal identity, and the second terminal identity is an identity used for communication between a terminal and the second node.

It should be noted that the first terminal identity in this embodiment of this application may be a 5G-S-TMSI, and that the second terminal identity may be a terminal identity dedicated to DP communication, which may be an identity assigned to the terminal by the DPF node or the DPF-C node, or an identity reported by an upper layer of the terminal to the DPF node or the DPF-C node.

In this implementation, the AMF sends the first terminal identity to the DPF, and the DPF associates the first terminal identity with the second terminal identity and returns the association relationship to the AMF.

Optionally, another optional implementation of the performing a terminal identity association operation with a second node includes:
the third node receives a second terminal identity sent by the second node, where the second terminal identity is an identity used for communication between a terminal and the second node;
the third node associates the second terminal identity with a first terminal identity, where the first terminal identity is an identity used for communication between the terminal and the third node; and
the third node sends an association relationship to the second node, where the association relationship is used to indicate that the first terminal identity is associated with the second terminal identity.

In this implementation, the DPF node or DPF-C node sends the second terminal identity to the AMF, and the AMF associates the second terminal identity with the first terminal identity and returns the association relationship to the DPF node or DPF-C node. The first terminal identity, the second terminal identity, and the association relationship are exchanged through a D3 interface between the DPF node or DPF-C node and the AMF.

It should be noted that in this embodiment of this application, identities for communication between the terminal and different devices are associated. The association can ensure accurate transmission of terminal information between these devices, and further ensure smooth progress of data communication.

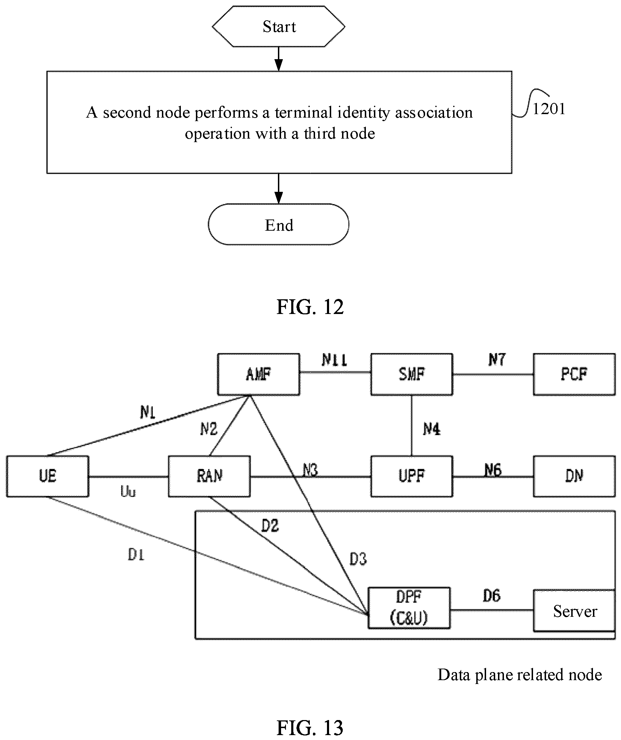

Corresponding to the implementation of the third node side, as shown in FIG. 12, an embodiment of this application further provides a communication method, including the following step.

Step 1201: A second node performs a terminal identity association operation with a third node, where
the second node is a data plane function DPF node or a data plane control function DPF-C node.

Optionally, the performing a terminal identity association operation with a third node includes:
receiving, by the second node, a first terminal identity sent by the third node, where the first terminal identity is an identity used for communication between a terminal and the third node;
associating, by the second node, a second terminal identity with the first terminal identity, where the second terminal identity is an identity used for communication between a terminal and the second node; and
sending, by the second node, an association relationship to the third node, where the association relationship is used to indicate that the first terminal identity is associated with the second terminal identity.

Optionally, the performing a terminal identity association operation with a third node includes:
sending, by the second node, a second terminal identity to the third node, where the second terminal identity is an identity used for communication between a terminal and the second node; and
receiving, by the second node, an association relationship sent by the third node, where the association relationship is used to indicate that a first terminal identity is associated with the second terminal identity.

It should be noted that all descriptions of the second node side in the foregoing embodiment are applicable to the embodiment of the communication method applied to the second node, with the same technical effect achieved. Details are not described herein again.

With reference to the foregoing embodiments, procedures related to the DP-oriented connection in the embodiments of this application are illustrated as follows.

### Specific application scenario 1

FIG. 13 shows a network architecture supporting a data plane function. Network nodes mainly included in the network architecture are: a user terminal (UE); a radio access network (Radio Access Network, RAN) device, which may be a 5G gNB or a wireless network access device xNB of a future wireless network; an access and mobility management function (AMF) node, which mainly performs access control and mobility management for the UE by using NAS signaling; a session management function (Session Management Function, SMF) node, which is mainly responsible for session management of UP service data transmission of the UE; a policy control function (Policy Control Function, PCF) node, which is mainly responsible for management of charging or a policy for UP service data transmission of the UE and the like; a user plane function (User plane Function, UPF) node, which mainly forwards UP service data transmission itself between a data network (Data network, DN) and a radio access network; and a data plane function (DPF) node. In this case, a data plane function node has both a DPF-C and a DPF-U.

The AMF, SMF, PCF, and UPF are all CP or UP nodes in a 5G network; and the DPF is a network node that supports a data plane protocol and related functions in the network.

Included interfaces are as follows:
D1 interface: an information transmission interface between the DPF and the UE, which can transmit control signaling parameters for establishing a data plane sub-link between the UE and the DPF, and can also be used for DP service data transmission itself between the UE and the DPF. Detailed information is described in the following procedure;
D2 interface: an information transmission interface between the DPF and the radio access network device, used for the DPF to provide necessary configuration parameters and control information for establishing the DP sub-link of the UE;
D3 interface: an interface for information exchange between the DPF and the AMF.
D6 interface: an interface between the DPF and a data plane service server; and

Uu interface: an air interface between the wireless network device xNB and the UE, used for DP-related control signaling transmission after supporting the DP protocol. Detailed information is described in the following procedure.

It should be noted that other interfaces in FIG. 13 are all interfaces between corresponding network nodes in the existing 5G CP and UP architectures. Functions of the other interfaces are the same as those in the current 5G. Details are not described herein again.

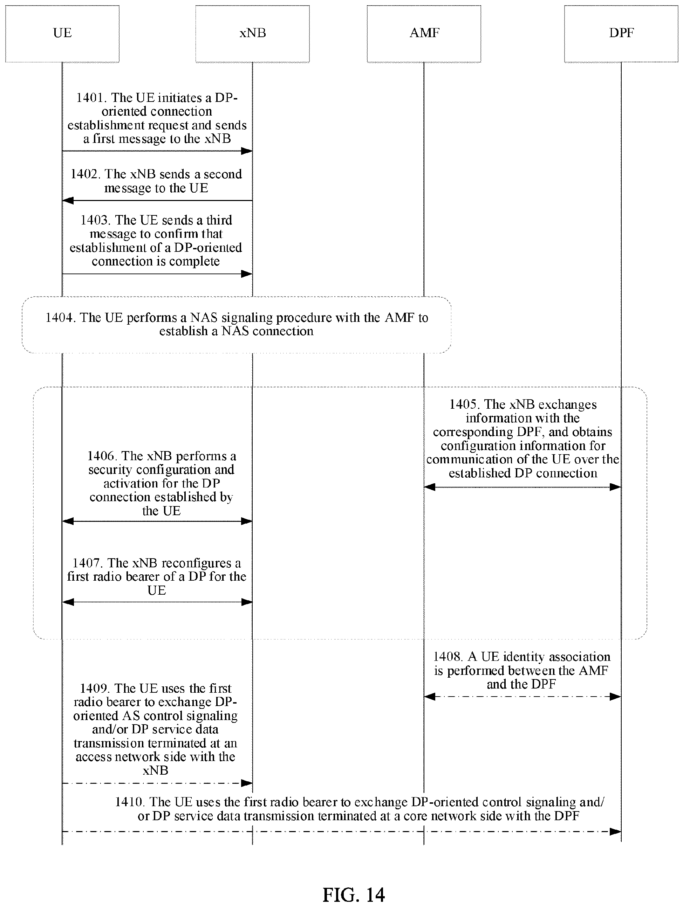

Based on the foregoing architecture in FIG. 13, a DP establishment procedure is shown in FIG. 14, and its specific steps and related methods are as follows.

Step 1401: UE initiates a DP-oriented connection establishment request and sends a first message to an xNB.

Step 1402: The xNB sends a second message to the UE, providing corresponding configuration information for a first radio bearer dedicated to a DP.

Step 1403: The UE sends a third message to confirm that establishment of a DP-oriented connection is complete, where
the third message carries a connection type of the DP-oriented connection established by the UE.

Step 1404: The UE performs a NAS signaling procedure with an AMF to establish a NAS connection.

It should be noted that step 1404 is an optional procedure. Specifically, the UE, the xNB, and the AMF may register the UE based on an initial registration or registration update process and establish a NAS connection. If the AMF knows that the UE is establishing the DP-oriented connection and accepts the registration of the UE, the AMF provides the UE with at least a list of tracking areas corresponding to a registration area in a registration accept message. Optionally, the xNB may notify the AMF, so that the AMF can know whether the UE is establishing the DP-oriented connection.

Step 1405: The xNB exchanges information with a corresponding DPF, and obtains configuration information for communication of the UE over the established DP connection.

Step 1406: The xNB performs a security configuration and activation for the DP connection established by the UE.

It should be noted that the xNB sends a security configuration and activation message to the UE, providing the UE with security-related configuration parameters including encryption and integrity. After receiving the security configuration and activation message, the UE applies the security-related configuration to the first radio bearer of the DP, and returns a security activation complete message to the xNB.

Optionally, the security-related configuration parameters provided by the xNB for the UE may be obtained from the DPF in step 1404 or autonomously generated by the xNB. For example, if the connection type of the DP-oriented connection established by the UE in step 1403 is terminating at an access network side, the xNB autonomously generates the security-related configuration parameters. How to generate the parameters depends on an implementation of the xNB. This is not limited herein.

Optionally, the security configuration and activation message and the security activation complete message may be existing security mode control RRC messages or dedicated signaling specifically configured for the DP.

Optionally, after performing step 1406, the UE completes establishment of the end-to-end DP connection with the DPF.

Step 1407: The xNB reconfigures the first radio bearer of the DP for the UE.

It should be noted that, through reconfiguration, the xNB may update the configuration parameters of the established first radio bearer of the DP, including parameters such as PDCP, RLC, and a logical channel, and configuration parameters related to wireless communication resources used for transmission thereof. Optionally, an RRC reconfiguration message or a dedicated message for the reconfiguration of the first radio bearer of the DP may be used for sending the reconfiguration information.

Optionally, the xNB and/or the DPF may perform steps 1405, 1406, and/or 1407 and exchange corresponding information after the UE registration procedure in step 1404 is completed. Herein, it should be noted that steps 1405 and 1406 are usually mandatory steps, while step 1407 is an optional step.

Step 1408: A UE identity association is performed between the AMF and the DPF.

It should be noted that step 1408 is an optional procedure.

Step 1409: The UE uses the first radio bearer to exchange DP-oriented AS control signaling and/or DP service data transmission terminated at the access network side with the xNB.

Step 1410: The UE uses the first radio bearer to exchange DP-oriented control signaling and/or DP service data transmission terminated at a core network side with the DPF.

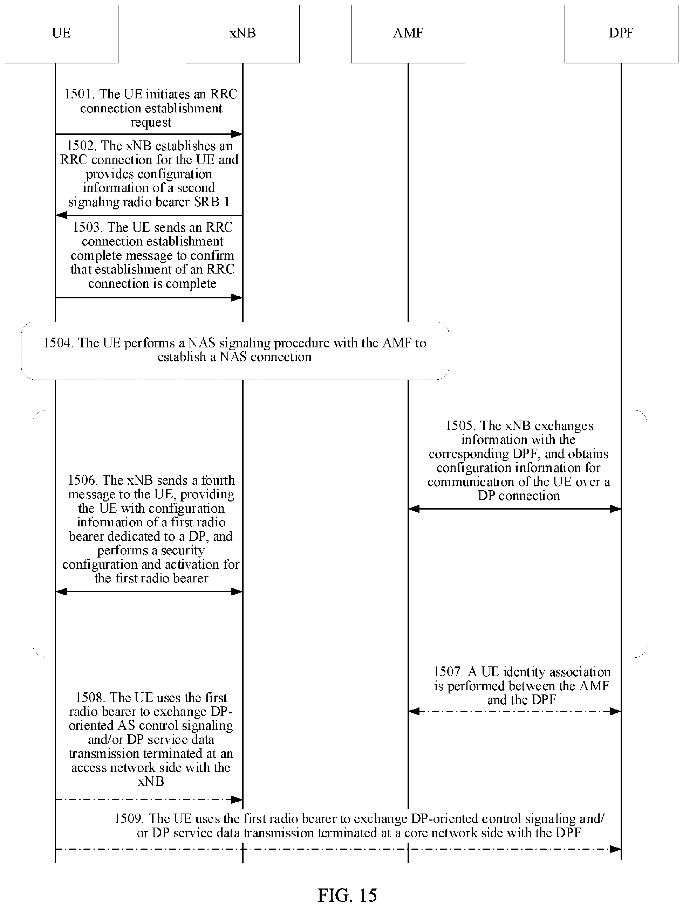

Based on the foregoing architecture in FIG. 13, another DP establishment procedure is shown in FIG. 15, and its specific steps and related methods are as follows.

Step 1501: UE initiates an RRC connection establishment request.

It should be noted that the UE initiates an RRC connection establishment process. Specifically, the UE uses an SRB 0 to send the RRC connection establishment request.

Step 1502: An xNB establishes an RRC connection for the UE and provides configuration information for a second signaling radio bearer SRB 1.

It should be noted that the xNB sends an RRC connection establishment message for the UE, where the message includes the configuration information for the second signaling radio bearer SRB 1.

Step 1503: The UE sends an RRC connection establishment complete message to confirm that establishment of the RRC connection is complete.

It should be noted that the RRC connection establishment complete message carries first information.

Step 1504: The UE performs a NAS signaling procedure with an AMF to establish a NAS connection.

It should be noted that step 1504 is an optional procedure. For a specific process, refer to the foregoing step 1404. Details are not described herein again.

Step 1505: The xNB exchanges information with a corresponding DPF, and obtains configuration information for communication of the UE over a DP connection.

Step 1506: The xNB sends a fourth message to the UE, providing the UE with configuration information for a first radio bearer dedicated to a DP, and performs a security configuration and activation for the first radio bearer.

It should be noted that, for the process of performing the security configuration and activation for the first radio bearer, reference may be made to the foregoing step 1406. Details are not described herein again.

Step 1507: A UE identity association is performed between the AMF and the DPF.

It should be noted that step 1507 is an optional procedure.

Step 1508: The UE uses the first radio bearer to exchange DP-oriented AS control signaling and/or DP service data transmission terminated at an access network side with the xNB.

Step 1509: The UE uses the first radio bearer to exchange DP-oriented control signaling and/or DP service data transmission terminated at a core network side with the DPF.

### Specific application scenario 2

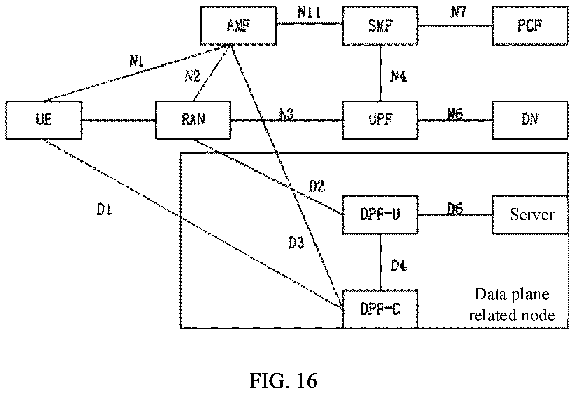

FIG. 16 shows a second network architecture supporting a data plane function. Differences from the architectural diagram in FIG. 13 in the specific application scenario 1 are as follows.

### Network node

A data plane function node is split into two nodes: a data plane control function node (DPF-C) and a data plane service transmission function node (DPF-U), which are connected by a D4 interface.

Interface:
A D1 interface is an interface between the DPF-C and UE;
D2 is an interface between the DPF-U and an xNB;
D3 is an interface between the DPF-C and an AMF;
D4 is an interface between the DPF-C and the DPF-U; and
D6 is an interface between the DPF-U and a server, and its function is the same as that of the D6 interface in the specific application scenario 1.

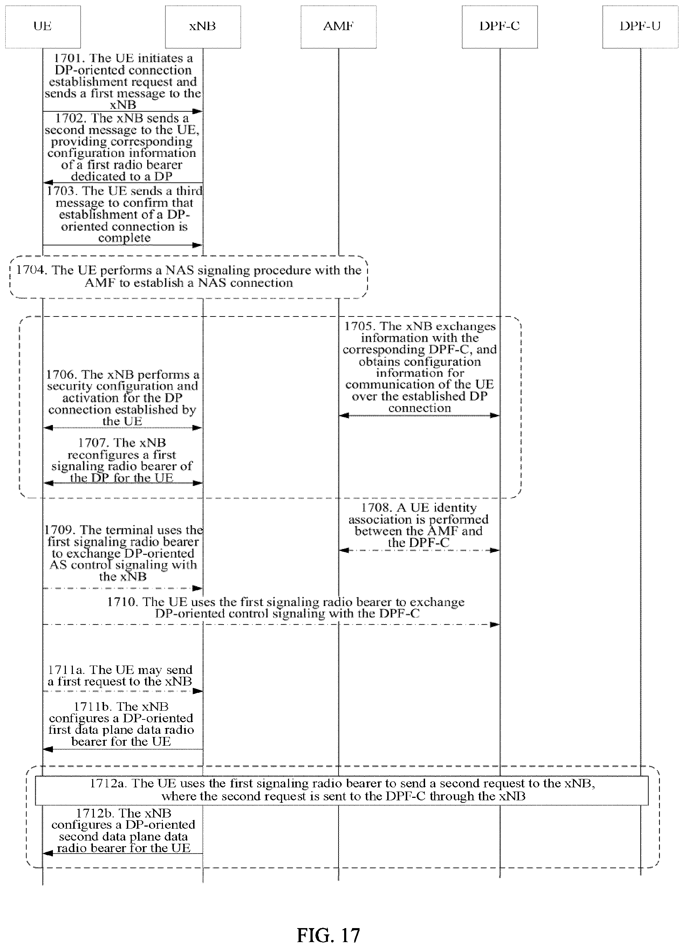

Based on the architecture in FIG. 16, a DP establishment procedure is shown in FIG. 17, and its specific steps and related methods are as follows:
Step 1701: UE initiates a DP-oriented connection establishment request and sends a first message to an xNB.
Step 1702: The xNB sends a second message to the UE, providing corresponding configuration information for a first radio bearer dedicated to a DP.
Step 1703: The UE sends a third message to confirm that establishment of a DP-oriented connection is complete, where
the third message carries a connection type of the DP-oriented connection established by the UE.
Step 1704: The UE performs a NAS signaling procedure with an AMF to establish a NAS connection.

It should be noted that step 1704 is an optional procedure. For a specific process, refer to the foregoing step 1404. Details are not described herein again.

Step 1705: The xNB exchanges information with a corresponding DPF-C, and obtains configuration information for communication of the UE over the established DP connection.

It should be noted that the exchange between the xNB and the DPF-C is: the information is first sent to the AMF through a D3 interface, and then forwarded by the AMF to the xNB through an N2 interface.

Step 1706: The xNB performs a security configuration and activation for the DP connection established by the UE.

It should be noted that the xNB sends a security configuration and activation message to the UE, providing the UE with security-related configuration parameters including encryption and integrity. After receiving the security configuration and activation message, the UE applies the security-related configuration to the first radio bearer of the DP, and returns a security activation complete message to the xNB.

Optionally, the security-related configuration parameters provided by the xNB for the UE may be obtained from the DPF in step 1704 or autonomously generated by the xNB. For example, if the connection type of the DP-oriented connection established by the UE in step 1703 is terminating at an access network side, the xNB autonomously generates the security-related configuration parameters. How to generate the parameters depends on an implementation of the xNB. This is not limited herein.

Optionally, the security configuration and activation message and the security activation complete message may be existing security mode control RRC messages or dedicated signaling specifically configured for the DP.

Optionally, after performing step 1706, the UE completes establishment of the end-to-end DP connection with the DPF.

Step 1707: The xNB reconfigures a first signaling radio bearer of the DP for the UE.

It should be noted that, through reconfiguration, the xNB may update the configuration parameters of the established first signaling radio bearer of the DP, including parameters such as PDCP, RLC, and a logical channel, and configuration parameters related to wireless communication resources used for transmission thereof. Optionally, an RRC reconfiguration message or a dedicated message for the reconfiguration of the first signaling radio bearer of the DP may be used for sending the reconfiguration information.

Optionally, the xNB and/or the DPF-C may perform steps 1705, 1706, and/or 1707 and exchange corresponding information after the UE registration procedure in step 1704 is completed. Herein, it should be noted that steps 1705 and 1706 are usually mandatory steps, while step 1707 is an optional step.

Step 1708: A UE identity association is performed between the AMF and the DPF-C.

It should be noted that step 1708 is an optional procedure.

Step 1709: The terminal uses the first signaling radio bearer to exchange DP-oriented AS control signaling with the xNB.

Step 1710: The UE uses the first signaling radio bearer to exchange DP-oriented control signaling with the DPF-C.

It should be noted that, after performing the foregoing process, the UE has established the DP-oriented connection and the first signaling radio bearer of the DP.

Step 1711: The xNB configures a DP-oriented first data plane data radio bearer for the UE.

Optionally, in step 1711a, the UE may send a first request to the xNB, where the request may include indication information that the data plane data radio bearer requested by the terminal is terminated at the access network side.

In step 1711b, the xNB configures the DP-oriented first data plane data radio bearer for the UE, where the configuration carries the indication information that the first data plane data radio bearer is terminated at the access network side.

Step 1712: The network configures a DP-oriented second data plane data radio bearer for the UE.

Optionally, in step 1712a, the UE uses the first signaling radio bearer to send a second request to the xNB, where the second request is sent to the DPF-C through the xNB and may include indication information that the second data plane data radio bearer is terminated at a core network side.

It should be noted that the second request may be sent in a form of a container to the xNB by using the first signaling radio bearer, then transparently transmitted by the xNB to the AMF through the N2 interface, and then forwarded by the AMF to the DPF-C through the D3 interface.

In step 1712b, the xNB configures the DP-oriented second data plane data radio bearer for the UE, where the configuration carries the indication information that the second data plane data radio bearer is terminated at the core network side.

It should be noted that the DPF-C may provide a RAN side with configuration parameters related to the second data plane radio bearer, such as a QoS criterion, and security configuration activation related information, and the information and configuration parameters are forwarded by the AMF to the xNB. The xNB generates configuration information for the DP-oriented second data plane data radio bearer based on the information and parameters. The UE establishes the second data plane data radio bearer based on the configuration information.

The communication method provided in this embodiment of this application may be performed by a communication apparatus. A communication apparatus provided in an embodiment of this application is described by assuming that the communication apparatus performs the communication method in this embodiment of this application.

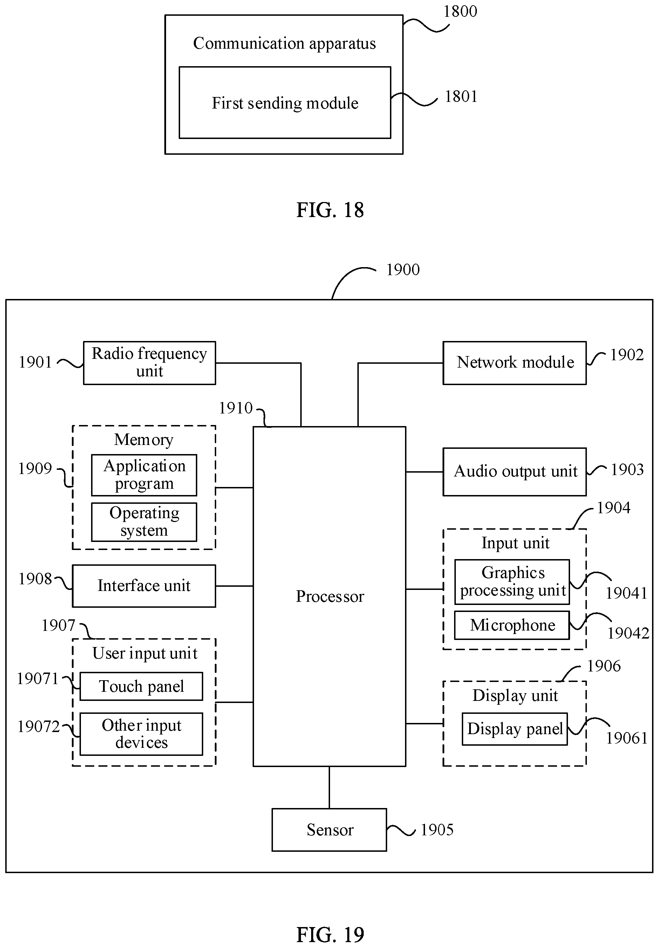

As shown in FIG. 18, an embodiment of this application provides a communication apparatus 1800, including:
a first sending module 1801, configured to send first information to a first node, where the first information is used to indicate that a terminal requests a data plane DP-oriented connection, where
the first information includes first indication information; and
the first indication information is used to indicate at least one of the following:
   an establishment reason for the DP-oriented connection; and
   a type of the DP-oriented connection.

Optionally, the first sending module 1801 includes at least one of the following:
a first sending unit, configured to send a first message to the first node, where the first message is used to request a network side to establish the DP-oriented connection, and the first message includes the first information; and
a second sending unit, configured to send an RRC connection establishment complete message to the first node, where the RRC connection establishment complete message includes the first information.

Optionally, the first sending unit is configured to implement at least one of the following:
actively triggering sending of the first message to the first node; and
sending the first message to the first node based on a received first notification message sent by the first node.

Optionally, the actively triggering sending of the first message to the first node includes:
sending the first message to the first node in a case that it is determined that a measurement quantity of DP data meets a first preset threshold.

Optionally, an implementation of the sending the first message to the first node in a case that it is determined that a measurement quantity of DP data meets a first preset threshold includes:
in the case that it is determined that the measurement quantity of the DP data meets the first preset threshold, triggering, by a non-access stratum NAS, a first message sending request to an access stratum AS; and
sending, by the AS, the first message to the first node based on the first message sending request.

Optionally, the NAS is a CP-oriented protocol layer or a DP-oriented protocol layer.

Optionally, the first notification message includes second indication information, and the second indication information is used to indicate the establishment reason for the DP-oriented connection and/or the type of the DP-oriented connection.

Optionally, the first notification message is a paging message.

Optionally, the first message further includes third indication information, the third indication information is used to indicate an establishment reason for a first connection or a type of the first connection, and the first connection is another connection different from the DP-oriented connection.

Optionally, after the first sending unit sends the first message to the first node, the apparatus further includes:
a first receiving unit, configured to receive a second message sent by the first node, where the second message includes configuration information for a first bearer corresponding to the DP-oriented connection, and the first bearer is a first radio bearer or a first signaling radio bearer; and
a third sending unit, configured to send a third message to the first node, where the third message is used to indicate that establishment of the DP-oriented connection is complete.

Optionally, the second message is a DP-oriented connection establishment message.

Optionally, the second message includes identification information for DP communication.

Optionally, the first bearer is used for at least one of the following:
transmission of DP-related control information; and
transmission of DP service data.

Optionally, the second message further includes:
configuration information corresponding to a second signaling radio bearer.

Optionally, the third message includes:
a connection type of the DP-oriented connection established by the terminal, where
the connection type includes one of the following:
   the DP-oriented connection is terminated at an access network side; and
   the DP-oriented connection is terminated at a core network side.

Optionally, a manner of obtaining the connection type includes at least one of the following:
obtaining by using a NAS indication; and
obtaining by using the first notification message of the first node.

Optionally, in a case that the connection type is the DP-oriented connection terminated at the access network side, the third message further includes initial NAS information.

Optionally, the third message includes:
fourth indication information, where the fourth indication information is used to indicate other connection types, where
the other connection types include at least one of the following:
   a DP connection type of data; and
   a DP connection type of control.

Optionally, the third message includes:
identification information of a second node, where the second node is a data plane function DPF node or a data plane control function DPF-C node; and
identification information of a public land mobile network PLMN selected for access by the terminal.

Optionally, the third message is a DP-oriented connection establishment complete message.

Optionally, the DP-oriented connection establishment complete message is a radio resource control RRC connection establishment complete message or a connection establishment complete message used for a DP.

Optionally, the third message is transmitted by using the first bearer or the second signaling radio bearer.

Optionally, the RRC connection establishment complete message further includes:
identification information of the terminal.

Optionally, the RRC connection establishment complete message further includes:
identification information of a second node, where the second node is a DPF node or a DPF-C node.

Optionally, before the second sending unit sends the RRC connection establishment complete message to the first node, the apparatus further includes at least one of the following:
a fourth sending unit, configured to actively trigger sending of an RRC connection establishment request to the first node; and
a fifth sending unit, configured to send the RRC connection establishment request to the first node based on a received second notification message sent by the first node.

Optionally, the fourth sending unit is configured to: send the RRC connection establishment request to the first node in a case that the terminal determines that a measurement quantity of DP data meets a second preset threshold.

Optionally, the second notification message includes fifth indication information, and the fifth indication information is used to indicate the establishment reason for the DP-oriented connection and/or the type of the DP-oriented connection.

Optionally, after the second sending unit sends the RRC connection establishment complete message to the first node, the apparatus further includes:
a fourth receiving module, configured to receive a fourth message sent by the first node, where the fourth message includes configuration information for a first bearer corresponding to the DP-oriented connection, and the first bearer is a first radio bearer or a first signaling radio bearer.

Optionally, in a case that the first bearer is the first signaling radio bearer, the apparatus further includes at least one of the following:
a fifth receiving module, configured to receive configuration information for a first data plane data radio bearer that is sent by the first node, where the configuration information includes sixth indication information, and the sixth indication information is used to indicate that the first data plane data radio bearer is terminated at an access network side; and
a sixth receiving module, configured to receive configuration information for a second data plane data radio bearer that is sent by the first node, where the configuration information includes eighth indication information, and the eighth indication information is used to indicate that the second data plane data radio bearer is terminated at a core network side.

Optionally, before the fifth receiving module receives the configuration information for the first data plane data radio bearer that is sent by the first node, the apparatus further includes:
a fourth sending module, configured to send a first request to the first node, where the first request is used to request configuration information for a data plane data radio bearer from the first node.

Optionally, the first request includes:
seventh indication information, where the seventh indication information is used to indicate that the data plane data radio bearer requested by the terminal is terminated at the access network side.

Optionally, the fourth sending module includes:
a sixth sending unit, configured to send the first request to the first node in a case that it is determined that the measurement quantity of the DP data meets a third preset threshold.

Optionally, before the sixth receiving module receives the configuration information for the second data plane data radio bearer that is sent by the first node, the apparatus further includes:
a fifth sending module, configured to send a second request to the first node, where the second request is used to request configuration information for a data plane data radio bearer from the first node.

Optionally, the second request includes:
ninth indication information, where the ninth indication information is used to indicate that the data plane data radio bearer requested by the terminal is terminated at the core network side.

Optionally, the fifth sending module includes:
a seventh sending unit, configured to send the second request to the first node in a case that it is determined that the measurement quantity of the DP data meets a fourth preset threshold.

The apparatus embodiment corresponds to the foregoing communication method embodiment, and each implementation process and implementation of the foregoing method embodiment can be applied to the apparatus embodiment, with the same technical effect achieved.

An embodiment of this application further provides a terminal, including a processor and a communication interface. The communication interface is configured to send first information to a first node, where the first information is used to indicate that the terminal requests a data plane DP-oriented connection, where
the first information includes first indication information; and
the first indication information is used to indicate at least one of the following:
   an establishment reason for the DP-oriented connection; and
   a type of the DP-oriented connection.

Optionally, the communication interface is configured to implement one of the following:
sending a first message to the first node, where the first message is used to request a network side to establish the DP-oriented connection, and the first message includes the first information; and
sending an RRC connection establishment complete message to the first node, where the RRC connection establishment complete message includes the first information.

Optionally, the communication interface is configured to implement at least one of the following:
actively triggering sending of the first message to the first node; and
sending the first message to the first node based on a received first notification message sent by the first node.

Optionally, the communication interface is configured to:
send the first message to the first node in a case that it is determined that a measurement quantity of DP data meets a first preset threshold.

Optionally, the communication interface is configured to:
in the case that it is determined that the measurement quantity of the DP data meets the first preset threshold, trigger, by a non-access stratum NAS, a first message sending request to an access stratum AS; and
send, by the AS, the first message to the first node based on the first message sending request.

Optionally, the NAS is a CP-oriented protocol layer or a DP-oriented protocol layer.

Optionally, the first notification message includes second indication information, and the second indication information is used to indicate the establishment reason for the DP-oriented connection and/or the type of the DP-oriented connection.

Optionally, the first notification message is a paging message.

Optionally, the first message further includes third indication information, the third indication information is used to indicate an establishment reason for a first connection or a type of the first connection, and the first connection is another connection different from the DP-oriented connection.

Optionally, the communication interface is further configured to:
receive a second message sent by the first node, where the second message includes configuration information for a first bearer corresponding to the DP-oriented connection, and the first bearer is a first radio bearer or a first signaling radio bearer; and
send a third message to the first node, where the third message is used to indicate that establishment of the DP-oriented connection is complete.

Optionally, the second message is a DP-oriented connection establishment message.

Optionally, the second message includes identification information for DP communication.

Optionally, the first bearer is used for at least one of the following:
transmission of DP-related control information; and
transmission of DP service data.

Optionally, the second message further includes:
configuration information corresponding to a second signaling radio bearer, where the second signaling radio bearer is used for transmission other than transmission of control information of the DP-oriented connection.

Optionally, the third message includes:
a connection type of the DP-oriented connection established by the terminal, where
the connection type includes one of the following:
   the DP-oriented connection is terminated at an access network side; and
   the DP-oriented connection is terminated at a core network side.

Optionally, a manner of obtaining the connection type includes at least one of the following:
obtaining by using a NAS indication; and
obtaining by using the first notification message of the first node.

Optionally, in a case that the connection type is the DP-oriented connection terminated at the access network side, the third message further includes initial NAS information.

Optionally, the third message includes:
fourth indication information, where the fourth indication information is used to indicate other connection types, where
the other connection types include at least one of the following:
   a DP connection type of data; and
   a DP connection type of control.

Optionally, the third message includes:
identification information of a second node, where the second node is a data plane function DPF node or a data plane control function DPF-C node; and
identification information of a public land mobile network PLMN selected for access by the terminal.

Optionally, the third message is a DP-oriented connection establishment complete message.

Optionally, the DP-oriented connection establishment complete message is a radio resource control RRC connection establishment complete message or a connection establishment complete message used for a DP.

Optionally, the third message is transmitted by using the first bearer or the second signaling radio bearer.

Optionally, the communication interface is configured to:
send an RRC connection establishment complete message to the first node, where the RRC connection establishment complete message includes the first information.

Optionally, the RRC connection establishment complete message further includes:
identification information of the terminal.

Optionally, the RRC connection establishment complete message further includes:
identification information of a second node, where the second node is a DPF node or a DPF-C node.

Optionally, the communication interface is further configured to implement at least one of the following:
actively triggering sending of an RRC connection establishment request to the first node; and
sending the RRC connection establishment request to the first node based on a received second notification message sent by the first node.

Optionally, the communication interface is configured to:
send the RRC connection establishment request to the first node in a case that it is determined that a measurement quantity of DP data meets a second preset threshold.

Optionally, the second notification message includes fifth indication information, and the fifth indication information is used to indicate the establishment reason for the DP-oriented connection and/or the type of the DP-oriented connection.

Optionally, the communication interface is further configured to:
receive a fourth message sent by the first node, where the fourth message includes configuration information for a first bearer corresponding to the DP-oriented connection, and the first bearer is a first radio bearer or a first signaling radio bearer.

Optionally, in a case that the first bearer is the first signaling radio bearer, the communication interface is further configured to implement at least one of the following:
receiving configuration information for a first data plane data radio bearer that is sent by the first node, where the configuration information includes sixth indication information, and the sixth indication information is used to indicate that the first data plane data radio bearer is terminated at an access network side; and
receiving configuration information for a second data plane data radio bearer that is sent by the first node, where the configuration information includes eighth indication information, and the eighth indication information is used to indicate that the second data plane data radio bearer is terminated at a core network side.

Optionally, the communication interface is further configured to:
send a first request to the first node, where the first request is used to request configuration information for a data plane data radio bearer from the first node.

Optionally, the first request includes:
seventh indication information, where the seventh indication information is used to indicate that the data plane data radio bearer requested by the terminal is terminated at the access network side.

Optionally, the communication interface is configured to:
send the first request to the first node in a case that it is determined that the measurement quantity of the DP data meets a third preset threshold.

Optionally, the communication interface is further configured to:
send a second request to the first node, where the second request is used to request configuration information for a data plane data radio bearer from the first node.

Optionally, the second request includes:
ninth indication information, where the ninth indication information is used to indicate that the data plane data radio bearer requested by the terminal is terminated at the core network side.

Optionally, the communication interface is configured to:
send the second request to the first node in a case that it is determined that the measurement quantity of the DP data meets a fourth preset threshold.

The terminal embodiment corresponds to the foregoing terminal-side method embodiment, and each implementation process and implementation of the foregoing method embodiment can be applied to the terminal embodiment, with the same technical effect achieved. Specifically, an embodiment of this application further provides a terminal. FIG. 19 is a schematic diagram of a hardware structure of a terminal for implementing an embodiment of this application.

The terminal 1900 includes but is not limited to at least some components such as a radio frequency unit 1901, a network module 1902, an audio output unit 1903, an input unit 1904, a sensor 1905, a display unit 1906, a user input unit 1907, an interface unit 1908, a memory 1909, and a processor 1910.

A person skilled in the art may understand that the terminal 1900 may further include a power supply (for example, a battery) supplying power to all components. The power supply may be logically connected to the processor 1910 through a power management system. In this way, functions such as charge management, discharge management, and power consumption management are implemented by using the power management system. The terminal structure shown in FIG. 19 does not constitute a limitation on the terminal. The terminal may include more or fewer components than those shown in the figure, or some components are combined, or component arrangements are different. Details are not described herein again.

It should be understood that, in this embodiment of this application, the input unit 1904 may include a graphics processing unit (Graphics Processing Unit, GPU) 19041 and a microphone 19042. The graphics processing unit 19041 processes image data of a still picture or video obtained by an image capture apparatus (such as a camera) in a video capture mode or an image capture mode. The display unit 1906 may include a display panel 19061, and the display panel 19061 may be configured in a form of a liquid crystal display, an organic light-emitting diode, or the like. The user input unit 1907 includes at least one of a touch panel 19071 and other input devices 19072. The touch panel 19071 is also referred to as a touchscreen. The touch panel 19071 may include two parts: a touch detection apparatus and a touch controller. The other input devices 19072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 1901 may transmit the downlink data to the processor 1910 for processing. In addition, the radio frequency unit 1901 may send uplink data to the network-side device. Usually, the radio frequency unit 1901 includes but is not limited to an antenna, an amplifier, a transceiver, a coupler, a low noise amplifier, a duplexer, and the like.

The memory 1909 may be configured to store software programs or instructions and various data. The memory 1909 may primarily include a first storage area for storing programs or instructions and a second storage area for storing data. The first storage area may store an operating system, an application program or instructions required by at least one function (such as an audio play function and an image play function), and the like. In addition, the memory 1909 may include a volatile memory or a non-volatile memory, or the memory 1909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 1909 in this embodiment of this application includes but is not limited to these and any other suitable types of memories.

The processor 1910 may include one or more processing units. Optionally, the processor 1910 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 1910.

The radio frequency unit 1901 is configured to send first information to a first node, where the first information is used to indicate that the terminal requests a data plane DP-oriented connection, where
the first information includes first indication information; and
the first indication information is used to indicate at least one of the following:
   an establishment reason for the DP-oriented connection; and
   a type of the DP-oriented connection.

Optionally, the radio frequency unit 1901 is configured to:
send a first message to the first node, where the first message is used to request a network side to establish the DP-oriented connection, and the first message includes the first information; and
send an RRC connection establishment complete message to the first node, where the RRC connection establishment complete message includes the first information.

Optionally, the radio frequency unit 1901 is configured to implement at least one of the following:
actively triggering sending of the first message to the first node; and
sending the first message to the first node based on a received first notification message sent by the first node.

Optionally, the radio frequency unit 1901 is configured to:
send the first message to the first node in a case that it is determined that a measurement quantity of DP data meets a first preset threshold.

Optionally, the radio frequency unit 1901 is configured to: in the case that it is determined that the measurement quantity of the DP data meets the first preset threshold, trigger, by a non-access stratum NAS, a first message sending request to an access stratum AS; and
send, by the AS, the first message to the first node based on the first message sending request.

Optionally, the NAS is a CP-oriented protocol layer or a DP-oriented protocol layer.

Optionally, the first notification message includes second indication information, and the second indication information is used to indicate the establishment reason for the DP-oriented connection and/or the type of the DP-oriented connection.

Optionally, the first notification message is a paging message.

Optionally, the first message further includes third indication information, the third indication information is used to indicate an establishment reason for a first connection or a type of the first connection, and the first connection is another connection different from the DP-oriented connection.

Optionally, the radio frequency unit 1901 is further configured to:
receive a second message sent by the first node, where the second message includes configuration information for a first bearer corresponding to the DP-oriented connection, and the first bearer is a first radio bearer or a first signaling radio bearer; and
send a third message to the first node, where the third message is used to indicate that establishment of the DP-oriented connection is complete.

Optionally, the second message is a DP-oriented connection establishment message.

Optionally, the second message includes identification information for DP communication.

Optionally, the first bearer is used for at least one of the following:
transmission of DP-related control information; and
transmission of DP service data.

Optionally, the second message further includes:
configuration information corresponding to a second signaling radio bearer, where the second signaling radio bearer is used for transmission other than transmission of control information of the DP-oriented connection.

Optionally, the third message includes:
a connection type of the DP-oriented connection established by the terminal, where
the connection type includes one of the following:
   the DP-oriented connection is terminated at an access network side; and
   the DP-oriented connection is terminated at a core network side.

Optionally, a manner of obtaining the connection type includes at least one of the following:
obtaining by using a NAS indication; and
obtaining by using the first notification message of the first node.

Optionally, in a case that the connection type is the DP-oriented connection terminated at the access network side, the third message further includes initial NAS information.

Optionally, the third message includes:
fourth indication information, where the fourth indication information is used to indicate other connection types, where
the other connection types include at least one of the following:
   a DP connection type of data; and
   a DP connection type of control.

Optionally, the third message includes:
identification information of a second node, where the second node is a data plane function DPF node or a data plane control function DPF-C node; and
identification information of a public land mobile network PLMN selected for access by the terminal.

Optionally, the third message is a DP-oriented connection establishment complete message.

Optionally, the DP-oriented connection establishment complete message is a radio resource control RRC connection establishment complete message or a connection establishment complete message used for a DP.

Optionally, the third message is transmitted by using the first bearer or the second signaling radio bearer.

Optionally, the radio frequency unit 1901 is configured to:
send an RRC connection establishment complete message to the first node, where the RRC connection establishment complete message includes the first information.

Optionally, the RRC connection establishment complete message further includes:
identification information of the terminal.

Optionally, the RRC connection establishment complete message further includes:
identification information of a second node, where the second node is a DPF node or a DPF-C node.

Optionally, the radio frequency unit 1901 is further configured to implement at least one of the following:
actively triggering sending of an RRC connection establishment request to the first node; and
sending the RRC connection establishment request to the first node based on a received second notification message sent by the first node.

Optionally, the radio frequency unit 1901 is configured to:
send the RRC connection establishment request to the first node in a case that it is determined that a measurement quantity of DP data meets a second preset threshold.

Optionally, the second notification message includes fifth indication information, and the fifth indication information is used to indicate the establishment reason for the DP-oriented connection and/or the type of the DP-oriented connection.

Optionally, the radio frequency unit 1901 is further configured to:
receive a fourth message sent by the first node, where the fourth message includes configuration information for a first bearer corresponding to the DP-oriented connection, and the first bearer is a first radio bearer or a first signaling radio bearer.

Optionally, in a case that the first bearer is the first signaling radio bearer, the radio frequency unit 1901 is further configured to implement at least one of the following:
receiving configuration information for a first data plane data radio bearer that is sent by the first node, where the configuration information includes sixth indication information, and the sixth indication information is used to indicate that the first data plane data radio bearer is terminated at an access network side; and
receiving configuration information for a second data plane data radio bearer that is sent by the first node, where the configuration information includes eighth indication information, and the eighth indication information is used to indicate that the second data plane data radio bearer is terminated at a core network side.

Optionally, the radio frequency unit 1901 is further configured to:
send a first request to the first node, where the first request is used to request configuration information for a data plane data radio bearer from the first node.

Optionally, the first request includes:
seventh indication information, where the seventh indication information is used to indicate that the data plane data radio bearer requested by the terminal is terminated at the access network side.

Optionally, the radio frequency unit 1901 is configured to:
send the first request to the first node in a case that it is determined that the measurement quantity of the DP data meets a third preset threshold.

Optionally, in a case that the first bearer is the first signaling radio bearer, the radio frequency unit 1901 is further configured to:

Optionally, the radio frequency unit 1901 is further configured to:
send a second request to the first node, where the second request is used to request configuration information for a data plane data radio bearer from the first node.

Optionally, the second request includes:
ninth indication information, where the ninth indication information is used to indicate that the data plane data radio bearer requested by the terminal is terminated at the core network side.

Optionally, the radio frequency unit 1901 is configured to:
send the second request to the first node in a case that it is determined that the measurement quantity of the DP data meets a fourth preset threshold.

Preferably, an embodiment of this application further provides a terminal, including a processor, a memory, and a program or instructions stored in the memory and capable of running on the processor. When the program or instructions are executed by the processor, each process of the foregoing communication method embodiment is implemented, with the same technical effect achieved. To avoid repetition, details are not described herein again.

An embodiment of this application further provides a readable storage medium. The computer-readable storage medium stores a program or instructions. When the program or instructions are executed by a processor, each process of the foregoing communication method embodiment is implemented, with the same technical effect achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

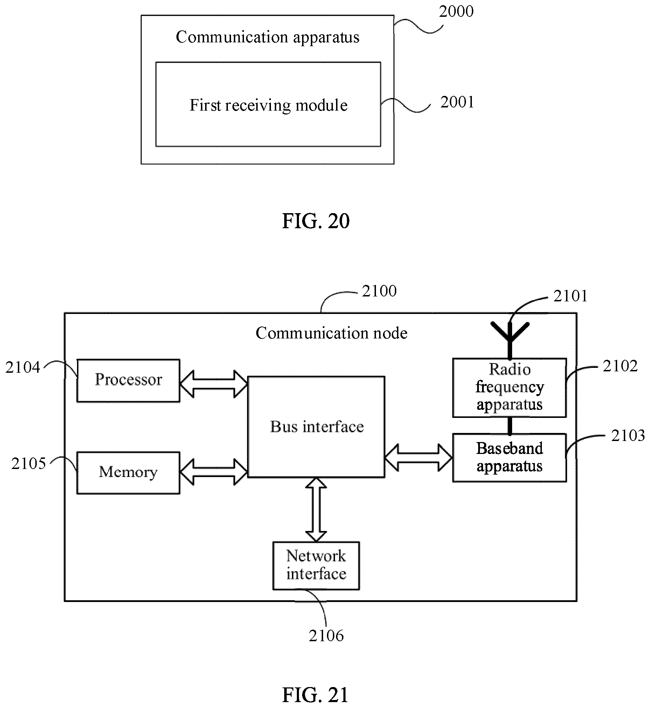

As shown in FIG. 20, an embodiment of this application further provides a communication apparatus 2000, including:
a first receiving module 2001, configured to receive first information sent by a terminal, where the first information is used to indicate that the terminal requests a data plane DP-oriented connection, where
the first information includes first indication information; and
the first indication information is used to indicate at least one of the following:
   an establishment reason for the DP-oriented connection; and
   a type of the DP-oriented connection.

Optionally, the first node is an access network device.

Optionally, the first receiving module 2001 includes:
a second receiving unit, configured to receive a first message sent by the terminal, where the first message is used to request a network side to establish the DP-oriented connection, and the first message includes the first information; and
a third receiving unit, configured to receive an RRC connection establishment complete message sent by the terminal, where the RRC connection establishment complete message includes the first information.

Optionally, the first message further includes third indication information, the third indication information is used to indicate an establishment reason for a first connection or a type of the first connection, and the first connection is another connection different from the DP-oriented connection.

Optionally, after the second receiving unit receives the first message sent by the terminal, the apparatus further includes:
an eighth sending unit, configured to send a second message to the terminal, where the second message includes configuration information for a first bearer corresponding to the DP-oriented connection, and the first bearer is a first radio bearer or a first signaling radio bearer; and
a fourth receiving unit, configured to receive a third message sent by the terminal, where the third message is used to indicate that establishment of the DP-oriented connection is complete.

Optionally, the second message is a DP-oriented connection establishment message.

Optionally, the second message includes identification information for DP communication.

Optionally, the first bearer is used for at least one of the following:
transmission of DP-related control information; and
transmission of DP service data.

Optionally, the second message further includes:
configuration information corresponding to a second signaling radio bearer, where the second signaling radio bearer is used for transmission other than transmission of control information of the DP-oriented connection.

Optionally, the third message includes:
a connection type of the DP-oriented connection established by the terminal, where
the connection type includes one of the following:
   the DP-oriented connection is terminated at an access network side; and
   the DP-oriented connection is terminated at a core network side.

Optionally, the third message includes:
fourth indication information, where the fourth indication information is used to indicate other connection types, where
the other connection types include at least one of the following:
   a DP connection type of data; and
   a DP connection type of control.

Optionally, the third message includes:
identification information of a second node, where the second node is a data plane function DPF node or a data plane control function DPF-C node; and
identification information of a public land mobile network PLMN selected for access by the terminal.

Optionally, the third message is a DP-oriented connection establishment complete message.

Optionally, the DP-oriented connection establishment complete message is a radio resource control RRC connection establishment complete message or a connection establishment complete message used for a DP.

Optionally, the RRC connection establishment complete message further includes:
identification information of the terminal.

Optionally, the RRC connection establishment complete message further includes:
identification information of a second node, where the second node is a DPF node or a DPF-C node.

Optionally, after the receiving an RRC connection establishment complete message sent by the terminal, the apparatus further includes:
the first node receives an RRC connection establishment request sent by the terminal.

Optionally, after the third receiving unit receives the RRC connection establishment complete message sent by the terminal, the apparatus further includes:
a sixth sending module, configured to send a fourth message to the terminal, where the fourth message includes configuration information for a first bearer corresponding to the DP-oriented connection, and the first bearer is a first radio bearer or a first signaling radio bearer.

Optionally, in a case that the first bearer is the first signaling radio bearer, the apparatus further includes at least one of the following:
a seventh sending module, configured to send configuration information for a first data plane data radio bearer to the terminal, where the configuration information includes sixth indication information, and the sixth indication information is used to indicate that the first data plane data radio bearer is terminated at an access network side; and
an eighth sending module, configured to send configuration information for a second data plane data radio bearer to the terminal, where the configuration information includes eighth indication information, and the eighth indication information is used to indicate that the second data plane data radio bearer is terminated at a core network side.

Optionally, before the seventh sending module sends the configuration information for the first data plane data radio bearer to the terminal, the apparatus further includes:
a seventh receiving module, configured to receive a first request sent by the terminal, where the first request is used to request configuration information for a data plane data radio bearer from the first node.

Optionally, the first request includes:
seventh indication information, where the seventh indication information is used to indicate that the data plane data radio bearer requested by the terminal is terminated at the access network side.

Optionally, before the eighth sending module sends the configuration information for the second data plane data radio bearer to the terminal, the apparatus further includes:
an eighth receiving module, configured to receive a second request sent by the terminal, where the second request is used to request configuration information for a data plane data radio bearer from the first node.

Optionally, the second request includes:
ninth indication information, where the ninth indication information is used to indicate that the data plane data radio bearer requested by the terminal is terminated at the core network side.

It should be noted that this apparatus embodiment is an apparatus corresponding to the foregoing method. All implementations of the foregoing method embodiment are applicable to this apparatus embodiment, with the same technical effect achieved. Details are not described herein again.

Preferably, an embodiment of this application further provides a communication node. The communication node is a first node and includes a processor, a memory, and a program or instructions stored in the memory and capable of running on the processor. When the program or instructions are executed by the processor, each process of the foregoing communication method embodiment is implemented, with the same technical effect achieved. To avoid repetition, details are not described herein again.

An embodiment of this application further provides a readable storage medium. The computer-readable storage medium stores a program or instructions. When the program or instructions are executed by a processor, each process of the foregoing communication method embodiment is implemented, with the same technical effect achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

An embodiment of this application further provides a communication node. The communication node is a first node and includes a processor and a communication interface. The communication interface is configured to receive first information sent by a terminal, where the first information is used to indicate that the terminal requests a data plane DP-oriented connection, where
the first information includes first indication information; and
the first indication information is used to indicate at least one of the following:
   an establishment reason for the DP-oriented connection; and
   a type of the DP-oriented connection.

The apparatus embodiment corresponds to the foregoing communication method embodiment, and each implementation process and implementation of the foregoing method embodiment can be applied to the apparatus embodiment, with the same technical effect achieved.

Specifically, an embodiment of this application further provides a communication node. The communication node is a first node. As shown in FIG. 21, the communication node 2100 includes an antenna 2101, a radio frequency apparatus 2102, a baseband apparatus 2103, a processor 2104, and a memory 2105. The antenna 2101 is connected to the radio frequency apparatus 2102. In an uplink direction, the radio frequency apparatus 2102 receives information by using the antenna 2101, and sends the received information to the baseband apparatus 2103 for processing. In a downlink direction, the baseband apparatus 2103 processes to-be-sent information, and sends the information to the radio frequency apparatus 2102; and the radio frequency apparatus 2102 processes the received information and then sends the information out by using the antenna 2101.

The method performed by the network-side device in the foregoing embodiment may be implemented in the baseband apparatus 2103. The baseband apparatus 2103 includes a baseband processor.

The baseband apparatus 2103 may include, for example, at least one baseband unit, where a plurality of chips are disposed on the baseband unit. As shown in FIG. 21, one of the chips is, for example, the baseband processor, connected to the memory 2105 by using a bus interface, to invoke a program in the memory 2105 to perform the operation of the network-side device shown in the foregoing method embodiment.

The network-side device may further include a network interface 2106, where the interface is, for example, a common public radio interface (common public radio interface, CPRI).

Specifically, the network-side device 2100 in this embodiment of the present invention further includes a program or instructions stored in the memory 2105 and capable of running on the processor 2104. When the processor 2104 invokes the program or instructions in the memory 2105, the method performed by each module shown in FIG. 20 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing communication method embodiment is implemented, with the same technical effect achieved. To avoid repetition, details are not described herein again.

The processor is a processor in the decoding device described in the foregoing embodiment. The readable storage medium includes a computer-readable storage medium, such as a computer read-only memory ROM, a random access memory RAM, a magnetic disk, or an optical disc.

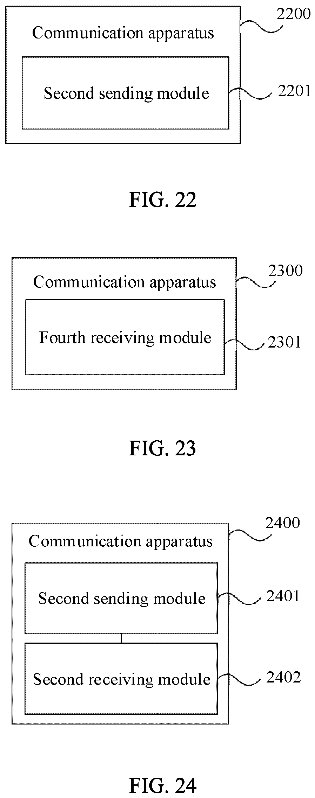

As shown in FIG. 22, an embodiment of this application further provides a communication apparatus 2200, including:
a second sending module 2201, configured to send a first notification to a third node, where the first notification is used to indicate to the third node whether a terminal is establishing a DP-oriented connection.

An embodiment of this application further provides a first node, including a processor and a communication interface. The communication interface is configured to send a first notification to a third node, where the first notification is used to indicate to the third node whether a terminal is establishing a DP-oriented connection.

Specifically, an embodiment of this application further provides a communication node. The communication node is a first node. Specifically, a structure of the first node is shown in FIG. 21. Details are not described herein again. Specifically, the first node in this embodiment of this application further includes a program or instructions stored in the memory and capable of running on the processor. The processor invokes the program or instructions in the memory to perform the method performed by each module shown in FIG. 22, with the same technical effect achieved. To avoid repetition, details are not described herein again.

An embodiment of this application further provides a readable storage medium. The readable storage medium stores a program or instructions. When the program or instructions are executed by a processor, each process of the foregoing communication method embodiment is implemented, with the same technical effect achieved. To avoid repetition, details are not described herein again.

The processor is a processor in the decoding device described in the foregoing embodiment. The readable storage medium includes a computer-readable storage medium, such as a computer read-only memory ROM, a random access memory RAM, a magnetic disk, or an optical disc.

As shown in FIG. 23, an embodiment of this application further provides a communication apparatus 2300, including:
a fourth receiving module 2301, configured to receive a first notification sent by a first node, where the first notification is used to indicate to the third node whether a terminal is establishing a DP-oriented connection.

An embodiment of this application further provides a communication node. The communication node is a third node and includes a processor and a communication interface. The communication interface is configured to receive a first notification sent by a first node, where the first notification is used to indicate to the third node whether a terminal is establishing a DP-oriented connection.

Specifically, an embodiment of this application further provides a communication node. The communication node is a third node. Specifically, a structure of the third node is shown in FIG. 21. Details are not described herein again. Specifically, the third node in this embodiment of this application further includes a program or instructions stored in the memory and capable of running on the processor. The processor invokes the program or instructions in the memory to perform the method performed by each module shown in FIG. 23, with the same technical effect achieved. To avoid repetition, details are not described herein again.

An embodiment of this application further provides a readable storage medium. The readable storage medium stores a program or instructions. When the program or instructions are executed by a processor, each process of the foregoing communication method embodiment is implemented, with the same technical effect achieved. To avoid repetition, details are not described herein again.

The processor is a processor in the decoding device described in the foregoing embodiment. The readable storage medium includes a computer-readable storage medium, such as a computer read-only memory ROM, a random access memory RAM, a magnetic disk, or an optical disc.

As shown in FIG. 24, an embodiment of this application further provides a communication apparatus 2400, including:
a second sending module 2401, configured to send a request message to a second node, where the request message is used to request to obtain configuration information for communication of a terminal over an established DP connection, and the second node is a data plane function DPF node or a data plane control function DPF-C node; and
a second receiving module 2402, configured to receive the configuration information, sent by the second node, for communication of the terminal over the established DP connection.

An embodiment of this application further provides a communication node. The communication node is a first node and includes a processor and a communication interface. The communication interface is configured to send a request message to a second node, where the request message is used to request to obtain configuration information for communication of a terminal over an established DP connection, and the second node is a data plane function DPF node or a data plane control function DPF-C node; and receive the configuration information, sent by the second node, for communication of the terminal over the established DP connection.

Specifically, an embodiment of this application further provides a communication node. The communication node is a first node. Specifically, a structure of the first node is shown in FIG. 21. Details are not described herein again. Specifically, the first node in this embodiment of this application further includes a program or instructions stored in the memory and capable of running on the processor. The processor invokes the program or instructions in the memory to perform the method performed by each module shown in FIG. 24, with the same technical effect achieved. To avoid repetition, details are not described herein again.

An embodiment of this application further provides a readable storage medium. The readable storage medium stores a program or instructions. When the program or instructions are executed by a processor, each process of the foregoing communication method embodiment is implemented, with the same technical effect achieved. To avoid repetition, details are not described herein again.

The processor is a processor in the decoding device described in the foregoing embodiment. The readable storage medium includes a computer-readable storage medium, such as a computer read-only memory ROM, a random access memory RAM, a magnetic disk, or an optical disc.

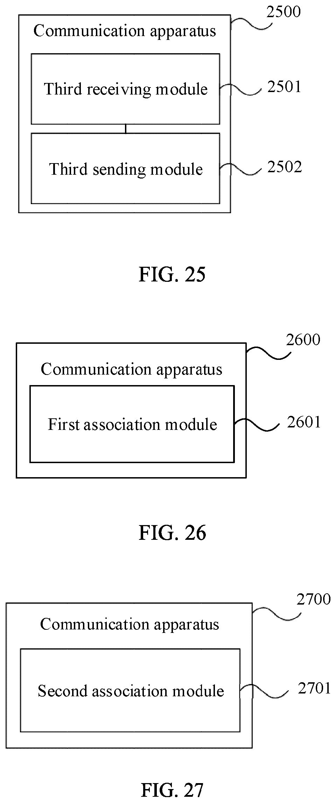

As shown in FIG. 25, an embodiment of this application further provides a communication apparatus 2500, including:
a third receiving module 2501, configured to receive a request message sent by a first node, where the request message is used to request to obtain configuration information for communication of a terminal over an established data plane DP connection; and
a third sending module 2502, configured to send, to the first node, the configuration information for communication of the terminal over the established DP connection, where
the second node is a data plane function DPF node or a data plane control function DPF-C node.

An embodiment of this application further provides a communication node. The communication node is a second node and includes a processor and a communication interface. The communication interface is configured to receive a request message sent by a first node, where the request message is used to request to obtain configuration information for communication of a terminal over an established data plane DP connection; and send, to the first node, the configuration information for communication of the terminal over the established DP connection, where
the second node is a data plane function DPF node or a data plane control function DPF-C node.

Specifically, an embodiment of this application further provides a communication node. The communication node is a second node. Specifically, a structure of the second node is shown in FIG. 21. Details are not described herein again. Specifically, the second node in this embodiment of this application further includes a program or instructions stored in the memory and capable of running on the processor. The processor invokes the program or instructions in the memory to perform the method performed by each module shown in FIG. 25, with the same technical effect achieved. To avoid repetition, details are not described herein again.

An embodiment of this application further provides a readable storage medium. The readable storage medium stores a program or instructions. When the program or instructions are executed by a processor, each process of the foregoing communication method embodiment is implemented, with the same technical effect achieved. To avoid repetition, details are not described herein again.

The processor is a processor in the decoding device described in the foregoing embodiment. The readable storage medium includes a computer-readable storage medium, such as a computer read-only memory ROM, a random access memory RAM, a magnetic disk, or an optical disc.

As shown in FIG. 26, an embodiment of this application further provides a communication apparatus 2600, including:
a first association module 2601, configured to perform a terminal identity association operation with a third node, where
the second node is a data plane function DPF node or a data plane control function DPF-C node.

Optionally, the first association module 2601 includes:
a fifth receiving unit, configured to receive a first terminal identity sent by the third node, where the first terminal identity is an identity used for communication between a terminal and the third node;
a first association unit, configured to associate a second terminal identity with the first terminal identity, where the second terminal identity is an identity used for communication between a terminal and the second node; and
a ninth sending unit, configured to send an association relationship to the third node, where the association relationship is used to indicate that the first terminal identity is associated with the second terminal identity.

Optionally, the first association module 2601 includes:
a tenth sending unit, configured to send a second terminal identity to the third node, where the second terminal identity is an identity used for communication between a terminal and the second node; and
a sixth receiving unit, configured to receive an association relationship sent by the third node, where the association relationship is used to indicate that the first terminal identity is associated with the second terminal identity.

An embodiment of this application further provides a communication node. The communication node is a second node and includes a processor and a communication interface. The processor is configured to perform a terminal identity association operation with a third node, where
the second node is a data plane function DPF node or a data plane control function DPF-C node.

Specifically, an embodiment of this application further provides a communication node. The communication node is a second node. Specifically, a structure of the second node is shown in FIG. 21. Details are not described herein again. Specifically, the second node in this embodiment of this application further includes a program or instructions stored in the memory and capable of running on the processor. The processor invokes the program or instructions in the memory to perform the method performed by each module shown in FIG. 26, with the same technical effect achieved. To avoid repetition, details are not described herein again.

An embodiment of this application further provides a readable storage medium. The readable storage medium stores a program or instructions. When the program or instructions are executed by a processor, each process of the foregoing communication method embodiment is implemented, with the same technical effect achieved. To avoid repetition, details are not described herein again.

The processor is a processor in the decoding device described in the foregoing embodiment. The readable storage medium includes a computer-readable storage medium, such as a computer read-only memory ROM, a random access memory RAM, a magnetic disk, or an optical disc.

As shown in FIG. 27, an embodiment of this application further provides a communication apparatus 2700. The apparatus is applied to a third node and includes:
a second association module 2701, configured to perform a terminal identity association operation with a second node, where the second node is a data plane function DPF node or a data plane control function DPF-C node.

Optionally, the third node is an access and mobility management function AMF.

Optionally, the second association module 2701 includes:
an eleventh sending unit, configured to send a first terminal identity to the second node, where the first terminal identity is an identity used for communication between a terminal and the third node; and
a seventh receiving unit, configured to receive an association relationship sent by the second node, where the association relationship is used to indicate that the first terminal identity is associated with a second terminal identity, and the second terminal identity is an identity used for communication between a terminal and the second node.

Optionally, the second association module 2701 includes:
an eighth receiving unit, configured to receive a second terminal identity sent by the second node, where the second terminal identity is an identity used for communication between a terminal and the second node;
a second association unit, configured to associate a second terminal identity with the first terminal identity, where the first terminal identity is an identity used for communication between the terminal and the third node; and
a twelfth sending unit, configured to send an association relationship to the second node, where the association relationship is used to indicate that the first terminal identity is associated with the second terminal identity.

An embodiment of this application further provides a communication node. The communication node is a third node and includes a processor and a communication interface. The processor is configured to perform a terminal identity association operation with a second node, where the second node is a data plane function DPF node or a data plane control function DPF-C node.

Specifically, an embodiment of this application further provides a communication node. The communication node is a third node. Specifically, a structure of the third node is shown in FIG. 21. Details are not described herein again. Specifically, the third node in this embodiment of this application further includes a program or instructions stored in the memory and capable of running on the processor. The processor invokes the program or instructions in the memory to perform the method performed by each module shown in FIG. 27, with the same technical effect achieved. To avoid repetition, details are not described herein again.

An embodiment of this application further provides a readable storage medium. The readable storage medium stores a program or instructions. When the program or instructions are executed by a processor, each process of the foregoing communication method embodiment is implemented, with the same technical effect achieved. To avoid repetition, details are not described herein again.

The processor is a processor in the decoding device described in the foregoing embodiment. The readable storage medium includes a computer-readable storage medium, such as a computer read-only memory ROM, a random access memory RAM, a magnetic disk, or an optical disc.

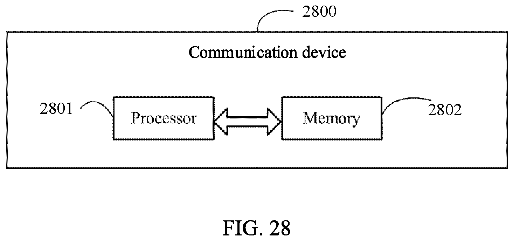

Optionally, as shown in FIG. 28, an embodiment of this application further provides a communication device 2800, including a processor 2801 and a memory 2802. The memory 2802 stores a program or instructions capable of running on the processor 2801. For example, when the communication device 2800 is a terminal, and the program or instructions are executed by the processor 2801, the steps of the foregoing communication method embodiment are implemented, with the same technical effect achieved. When the communication device 2800 is a first node, and the program or instructions are executed by the processor 2801, the steps of the foregoing communication method embodiment are implemented, with the same technical effect achieved. When the communication device 2800 is a second node, and the program or instructions are executed by the processor 2801, the steps of the foregoing communication method embodiment are implemented, with the same technical effect achieved. When the communication device 2800 is a third node, and the program or instructions are executed by the processor 2801, the steps of the foregoing communication method embodiment are implemented, with the same technical effect achieved. To avoid repetition, details are not described herein again.

In addition, an embodiment of this application provides a chip. The chip includes a processor and a communication interface. The communication interface is coupled to the processor. The processor is configured to run a program or instructions to implement each process of the foregoing communication method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing encoding method or decoding method embodiment, with the same technical effect achieved. To avoid repetition, details are not described herein again.

An embodiment of this application further provides a communication system, including at least a terminal, a first node, a second node, and a third node, where the terminal may be configured to perform the steps of the foregoing communication method, the first node may be configured to perform the steps of the foregoing communication method, the second node may be configured to perform the steps of the foregoing communication method, and the third node may be configured to perform the steps of the foregoing communication method, with the same technical effects achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A communication method, comprising:
sending, by a terminal, first information to a first node, wherein the first information is used to indicate that the terminal requests a data plane DP-oriented connection, wherein
the first information comprises first indication information; and
the first indication information is used to indicate at least one of the following:
an establishment reason for the DP-oriented connection; and
a type of the DP-oriented connection.

2. The method according to claim 1, wherein the sending first information to a first node comprises one of the following:
sending, by the terminal, a first message to the first node, wherein the first message is used to request a network side to establish the DP-oriented connection, and the first message comprises the first information; and
sending, by the terminal, an RRC connection establishment complete message to the first node, wherein the RRC connection establishment complete message comprises the first information.

3. The method according to claim 2, wherein the sending a first message to the first node comprises one of the following:
actively triggering, by the terminal, sending of the first message to the first node; and
sending, by the terminal, the first message to the first node based on a received first notification message sent by the first node.

4. The method according to claim 3, wherein the actively triggering sending of the first message to the first node comprises:
sending, by the terminal, the first message to the first node in a case that it is determined that a measurement quantity of DP data meets a first preset threshold.

5. The method according to claim 4, wherein the sending the first message to the first node in a case that it is determined that a measurement quantity of DP data meets a first preset threshold comprises:
in the case that it is determined that the measurement quantity of the DP data meets the first preset threshold, triggering, by a non-access stratum NAS of the terminal, a first message sending request to an access stratum AS; and
sending, by the AS, the first message to the first node based on the first message sending request.

6. The method according to any one of claims 3 to 5, wherein the first notification message comprises second indication information, and the second indication information is used to indicate the establishment reason for the DP-oriented connection and/or the type of the DP-oriented connection.

7. The method according to any one of claims 2 to 5, wherein the first message further comprises third indication information, the third indication information is used to indicate an establishment reason for a first connection or a type of the first connection, and the first connection is another connection different from the DP-oriented connection.

8. The method according to any one of claims 2 to 5, wherein after the sending a first message to the first node, the method further comprises:
receiving, by the terminal, a second message sent by the first node, wherein the second message comprises configuration information for a first bearer corresponding to the DP-oriented connection, and the first bearer is a first radio bearer or a first signaling radio bearer; and
sending, by the terminal, a third message to the first node, wherein the third message is used to indicate that establishment of the DP-oriented connection is complete.

9. The method according to claim 8, wherein the second message comprises identification information for DP communication.

10. The method according to claim 8, wherein the first bearer is used for at least one of the following:
transmission of DP-related control information; and
transmission of DP service data.

11. The method according to claim 8, wherein the second message further comprises:
configuration information corresponding to a second signaling radio bearer, wherein the second signaling radio bearer is used for transmission other than transmission of control information of the DP-oriented connection.

12. The method according to claim 8, wherein the third message comprises:
a connection type of the DP-oriented connection established by the terminal, wherein
the connection type comprises one of the following:
the DP-oriented connection is terminated at an access network side; and
the DP-oriented connection is terminated at a core network side.

13. The method according to claim 8 or 12, wherein the third message comprises:
fourth indication information, wherein the fourth indication information is used to indicate other connection types, wherein
the other connection types comprise at least one of the following:
a DP connection type of data; and
a DP connection type of control.

14. The method according to claim 8, 12, or 13, wherein the third message comprises:
identification information of a second node, wherein the second node is a data plane function DPF node or a data plane control function DPF-C node; and
identification information of a public land mobile network PLMN selected for access by the terminal.

15. The method according to claim 2, wherein the RRC connection establishment complete message further comprises at least one of the following:
identification information of the terminal; and
identification information of a second node, wherein the second node is a DPF node or a DPF-C node.

16. The method according to claim 2, wherein before the sending an RRC connection establishment complete message to the first node, the method further comprises at least one of the following:
actively triggering, by the terminal, sending of an RRC connection establishment request to the first node; and
sending, by the terminal, the RRC connection establishment request to the first node based on a received second notification message sent by the first node.

17. The method according to claim 16, wherein the actively triggering sending of an RRC connection establishment request to the first node comprises:
sending, by the terminal, the RRC connection establishment request to the first node in a case that it is determined that a measurement quantity of DP data meets a second preset threshold.

18. The method according to claim 16, wherein the second notification message comprises fifth indication information, and the fifth indication information is used to indicate the establishment reason for the DP-oriented connection and/or the type of the DP-oriented connection.

19. The method according to any one of claims 2 and 15 to 18, wherein after the sending an RRC connection establishment complete message to the first node, the method further comprises:
receiving, by the terminal, a fourth message sent by the first node, wherein the fourth message comprises configuration information for a first bearer corresponding to the DP-oriented connection, and the first bearer is a first radio bearer or a first signaling radio bearer.

20. The method according to claim 8 or 19, wherein in a case that the first bearer is the first signaling radio bearer, the method further comprises at least one of the following:
receiving, by the terminal, configuration information for a first data plane data radio bearer that is sent by the first node, wherein the configuration information comprises sixth indication information, and the sixth indication information is used to indicate that the first data plane data radio bearer is terminated at an access network side; and
receiving, by the terminal, configuration information for a second data plane data radio bearer that is sent by the first node, wherein the configuration information comprises eighth indication information, and the eighth indication information is used to indicate that the second data plane data radio bearer is terminated at a core network side.

21. The method according to claim 20, wherein before the receiving configuration information for a first data plane data radio bearer that is sent by the first node, the method further comprises:
sending, by the terminal, a first request to the first node, wherein the first request is used to request configuration information for a data plane data radio bearer from the first node.

22. The method according to claim 21, wherein the first request comprises:
seventh indication information, wherein the seventh indication information is used to indicate that the data plane data radio bearer requested by the terminal is terminated at the access network side.

23. The method according to claim 21 or 22, wherein the sending a first request to the first node comprises:
sending, by the terminal, the first request to the first node in a case that it is determined that the measurement quantity of the DP data meets a third preset threshold.

24. The method according to claim 20, wherein before the receiving configuration information for a second data plane data radio bearer that is sent by the first node, the method further comprises:
sending, by the terminal, a second request to the first node, wherein the second request is used to request configuration information for a data plane data radio bearer from the first node.

25. The method according to claim 24, wherein the second request comprises:
ninth indication information, wherein the ninth indication information is used to indicate that the data plane data radio bearer requested by the terminal is terminated at the core network side.

26. The method according to claim 24 or 25, wherein the sending a second request to the first node comprises:
sending, by the terminal, the second request to the first node in a case that it is determined that the measurement quantity of the DP data meets a fourth preset threshold.

27. A communication method, comprising:
receiving, by a first node, first information sent by a terminal, wherein the first information is used to indicate that the terminal requests a data plane DP-oriented connection, wherein
the first information comprises first indication information; and
the first indication information is used to indicate at least one of the following:
an establishment reason for the DP-oriented connection; and
a type of the DP-oriented connection.

28. The method according to claim 27, wherein the first node is an access network device.

29. The method according to claim 27 or 28, wherein the receiving first information sent by a terminal comprises one of the following:
receiving, by the first node, a first message sent by the terminal, wherein the first message is used to request a network side to establish the DP-oriented connection, and the first message comprises the first information; and
receiving, by the first node, an RRC connection establishment complete message sent by the terminal, wherein the RRC connection establishment complete message comprises the first information.

30. The method according to claim 29, wherein the first message further comprises third indication information, the third indication information is used to indicate an establishment reason for a first connection or a type of the first connection, and the first connection is another connection different from the DP-oriented connection.

31. The method according to claim 29 or 30, wherein after the receiving a first message sent by the terminal, the method further comprises:
sending, by the first node, a second message to the terminal, wherein the second message comprises configuration information for a first bearer corresponding to the DP-oriented connection, and the first bearer is a first radio bearer or a first signaling radio bearer; and
receiving, by the first node, a third message sent by the terminal, wherein the third message is used to indicate that establishment of the DP-oriented connection is complete.

32. The method according to claim 29, wherein after the receiving an RRC connection establishment complete message sent by the terminal, the method further comprises:
sending, by the first node, a fourth message to the terminal, wherein the fourth message comprises configuration information for a first bearer corresponding to the DP-oriented connection, and the first bearer is a first radio bearer or a first signaling radio bearer.

33. The method according to claim 31 or 32, wherein in a case that the first bearer is the first signaling radio bearer, the method further comprises at least one of the following:
sending, by the first node, configuration information for a first data plane data radio bearer to the terminal, wherein the configuration information comprises sixth indication information, and the sixth indication information is used to indicate that the first data plane data radio bearer is terminated at an access network side; and
sending, by the first node, configuration information for a second data plane data radio bearer to the terminal, wherein the configuration information comprises eighth indication information, and the eighth indication information is used to indicate that the second data plane data radio bearer is terminated at a core network side.

34. A communication method, comprising:
sending, by a first node, a request message to a second node, wherein the request message is used to request to obtain configuration information for communication of a terminal over an established DP connection, and the second node is a data plane function DPF node or a data plane control function DPF-C node; and
receiving, by the first node, the configuration information, sent by the second node, for communication of the terminal over the established DP connection.

35. A communication method, comprising:
receiving, by a second node, a request message sent by a first node, wherein the request message is used to request to obtain configuration information for communication of a terminal over an established data plane DP connection; and
sending, by the second node to the first node, the configuration information for communication of the terminal over the established DP connection, wherein
the second node is a data plane function DPF node or a data plane control function DPF-C node.

36. A communication method, comprising:
performing, by a third node, a terminal identity association operation with a second node, wherein the second node is a data plane function DPF node or a data plane control function DPF-C node.

37. The method according to claim 36, wherein the third node is an access and mobility management function AMF.

38. The method according to claim 36 or 37, wherein the performing a terminal identity association operation with a second node comprises:
sending, by the third node, a first terminal identity to the second node, wherein the first terminal identity is an identity used for communication between a terminal and the third node; and
receiving, by the third node, an association relationship sent by the second node, wherein the association relationship is used to indicate that the first terminal identity is associated with a second terminal identity, and the second terminal identity is an identity used for communication between a terminal and the second node.

39. The method according to claim 36 or 37, wherein the performing a terminal identity association operation with a second node comprises:
receiving, by the third node, a second terminal identity sent by the second node, wherein the second terminal identity is an identity used for communication between a terminal and the second node;
associating, by the third node, the second terminal identity with a first terminal identity, wherein the first terminal identity is an identity used for communication between a terminal and the third node; and
sending, by the third node, an association relationship to the second node, wherein the association relationship is used to indicate that the first terminal identity is associated with the second terminal identity.

40. A communication method, comprising:
performing, by a second node, a terminal identity association operation with a third node, wherein
the second node is a data plane function DPF node or a data plane control function DPF-C node.

41. The method according to claim 40, wherein the performing a terminal identity association operation with a third node comprises:
receiving, by the second node, a first terminal identity sent by the third node, wherein the first terminal identity is an identity used for communication between a terminal and the third node;
associating, by the second node, a second terminal identity with the first terminal identity, wherein the second terminal identity is an identity used for communication between a terminal and the second node; and
sending, by the second node, an association relationship to the third node, wherein the association relationship is used to indicate that the first terminal identity is associated with the second terminal identity.

42. The method according to claim 40, wherein the performing a terminal identity association operation with a third node comprises:
sending, by the second node, a second terminal identity to the third node, wherein the second terminal identity is an identity used for communication between a terminal and the second node; and
receiving, by the second node, an association relationship sent by the third node, wherein the association relationship is used to indicate that a first terminal identity is associated with the second terminal identity.

43. A communication apparatus, comprising:
a first sending module, configured to send first information to a first node, wherein the first information is used to indicate that a terminal requests a data plane DP-oriented connection, wherein
the first information comprises first indication information; and
the first indication information is used to indicate at least one of the following:
an establishment reason for the DP-oriented connection; and
a type of the DP-oriented connection.

44. A terminal, comprising a processor and a memory, wherein the memory stores a program or instructions capable of running on the processor, when the program or instructions are executed by the processor, the steps of the communication method according to any one of claims 1 to 26 are implemented.

45. A communication apparatus, comprising:
a first receiving module, configured to receive first information sent by a terminal, wherein the first information is used to indicate that the terminal requests a data plane DP-oriented connection, wherein
the first information comprises first indication information; and
the first indication information is used to indicate at least one of the following:
an establishment reason for the DP-oriented connection; and
a type of the DP-oriented connection.

46. A communication apparatus, comprising:
a second sending module, configured to send a request message to a second node, wherein the request message is used to request to obtain configuration information for communication of a terminal over an established DP connection, and the second node is a data plane function DPF node or a data plane control function DPF-C node; and
a second receiving module, configured to receive the configuration information, sent by the second node, for communication of the terminal over the established DP connection.

47. A communication node, wherein the communication node is a first node and comprises a processor and a memory, wherein the memory stores a program or instructions capable of running on the processor, when the program or instructions are executed by the processor, the steps of the method according to any one of claims 27 to 34 are implemented.

48. A communication apparatus, applied to a second node and comprising:
a third receiving module, configured to receive a request message sent by a first node, wherein the request message is used to request to obtain configuration information for communication of a terminal over an established data plane DP connection; and
a third sending module, configured to send, to the first node, the configuration information for communication of the terminal over the established DP connection, wherein
the second node is a data plane function DPF node or a data plane control function DPF-C node.

49. A communication apparatus, applied to a second node and comprising:
a first association module, configured to perform a terminal identity association operation with a third node, wherein
the second node is a data plane function DPF node or a data plane control function DPF-C node.

50. A communication node, wherein the communication node is a second node, the second node is a data plane function DPF node or a data plane control function DPF-C node, and the communication node comprises a processor and a memory, wherein the memory stores a program or instructions capable of running on the processor, when the program or instructions are executed by the processor, the steps of the method according to any one of claims 35 and 40 to 42 are implemented.

51. A communication apparatus, comprising:
a second association module, configured to perform a terminal identity association operation with a second node, wherein the second node is a data plane function DPF node or a data plane control function DPF-C node.

52. A communication node, wherein the communication node is a third node and comprises a processor and a memory, wherein the memory stores a program or instructions capable of running on the processor, when the program or instructions are executed by the processor, the steps of the method according to any one of claims 36 to 39 are implemented.

53. A readable storage medium, wherein the readable storage medium stores a program or instructions, when the program or instructions are executed by a processor, the steps of the communication method according to any one of claims 1 to 39 are implemented.
